# EUROPEAN PATENT APPLICATION

(11) **EP 4 797 782 A1**
(43) Date of publication of application: **26.08.2026**
(21) Application number: 24884739.4
(22) Date of filing: 29.10.2024
(51) Int. Cl.: H04W 28/02

(54) **COMMUNICATION METHOD AND APPARATUS**

(30) Priority: 03.11.2023 CN 202311469916
(71) Applicant: HUAWEI TECHNOLOGIES CO., LTD., Shenzhen, Guangdong 518129 (CN)
(72) Inventor: FAN, Qiang, Shenzhen, Guangdong 518129 (CN)
(74) Representative: Goddar, Heinz J.
(86) International application number: PCT/CN2024/128177
(87) International publication number: WO 2025/092736

(57) **Abstract**

A communication method and apparatus are provided, and are applied to the field of communication technologies. The method includes: A first protocol layer in a first communication apparatus sends first indication information to a first protocol layer in a second communication apparatus when a discard timer corresponding to a first data packet expires. The first indication information may indicate that the first data packet is no longer transmitted. The first protocol layer in the first communication apparatus directly indicates, to the first protocol layer in the second communication apparatus, a data packet that is no longer transmitted. This can reduce interaction between different protocol layers in a same communication apparatus, optimize a user plane protocol stack, and help improve resource utilization.

## Description

### CROSS-REFERENCE TO RELATED APPLICATIONS

This application claims priority to Chinese Patent Application No. 202311469916.7, filed with the China National Intellectual Property Administration on November 3, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

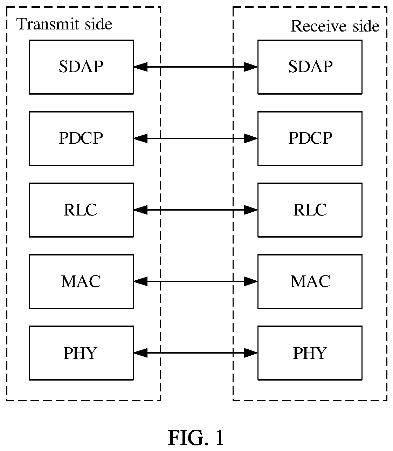

A layered protocol stack design is used in a wireless communication system. A user plane protocol stack on each of a transmit side and a receive side includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer, as shown in FIG. 1.

Currently, when receiving a PDCP service data unit (service data unit, SDU) from an upper layer, a PDCP entity on the transmit side may start a discard timer (discardTimer) associated with the PDCP SDU. If discardTimer expires, the PDCP entity on the transmit side discards the PDCP SDU and a corresponding PDCP protocol data unit (protocol data unit, PDU) that are associated with discardTimer. When discardTimer expires, if the PDCP PDU associated with discardTimer has been delivered to a lower layer (for example, the RLC layer), the PDCP entity may send, to an RLC entity, indication information that indicates to discard a corresponding data packet. Correspondingly, if a corresponding RLC SDU (or an RLC SDU segment) has not been delivered to a lower layer (for example, a MAC layer), the RLC entity may discard the RLC SDU (or the RLC SDU segment) based on the indication information. If the RLC SDU (or the RLC SDU segment) has been delivered to a lower layer, the RLC entity cannot discard the RLC SDU (or the RLC SDU segment), and cannot terminate an air interface transmission of the RLC SDU (or the RLC SDU segment). In addition, the RLC entity may continue to perform, on an air interface, an automatic repeat request (automatic repeat request, ARQ) transmission corresponding to the RLC SDU (or the RLC SDU segment). However, after discardTimer of a PDU SDU expires, an air interface transmission of a corresponding RLC SDU (or an RLC SDU segment) and an ARQ transmission corresponding to the RLC SDU (or the RLC SDU segment) are useless transmissions, causing a waste of air interface resources.

### SUMMARY

Embodiments of this application provide a communication method and apparatus, to optimize a user plane protocol stack, thereby improving resource utilization.

According to a first aspect, this application provides a communication method. The method may be applied to a first protocol layer in a first communication apparatus. Specifically, the method may include: The first protocol layer in the first communication apparatus sends first indication information to a first protocol layer in a second communication apparatus when a discard timer corresponding to a first data packet expires. The first indication information indicates that the first data packet is no longer transmitted.

The first communication apparatus and the second communication apparatus may be terminal devices or network devices. When the first communication apparatus is a terminal device, the second communication apparatus may be a network device or another terminal device. When the first communication apparatus is a network device, the second communication apparatus may be a terminal device. In this embodiment of this application, a function performed by the terminal device may be performed by an apparatus (for example, a chip, a chip system, or a circuit) in the terminal device or an apparatus that can be used together with the terminal device. In this embodiment of this application, a function performed by the network device may be performed by an apparatus (for example, a chip, a chip system, or a circuit) in the network device or an apparatus that can be used together with the network device.

In the foregoing embodiment, the first protocol layer in the first communication apparatus discards the first data packet in response to expiry of the discard timer corresponding to the first data packet, and sends the first indication information to the first protocol layer in the second communication apparatus, to indicate that the first data packet is no longer transmitted. Compared with a solution in which a PDCP layer sends indication information to an RLC layer, this embodiment can reduce interaction between protocol layers in a same communication apparatus, optimize a user plane protocol stack, reduce a resource waste caused because the RLC layer has delivered, to a lower layer for a transmission or a retransmission when the RLC layer receives the indication information, a data packet that is no longer transmitted, and improve resource utilization.

In a possible implementation, the first protocol layer in the first communication apparatus may further update a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

For example, the first indication information further indicates that a data packet whose sequence number is less than the updated first variable is no longer transmitted. Alternatively, the first protocol layer in the first communication apparatus may further send third indication information to the first protocol layer in the second communication apparatus. The third indication information indicates that a data packet whose sequence number is less than the updated first variable is no longer transmitted.

In the foregoing implementation, the first protocol layer in the first communication apparatus updates the lower edge of the transmitting window, and sends, to the first protocol layer in the second communication apparatus, an indication that the data packet whose sequence number is less than the updated first variable is no longer transmitted, thereby reducing interaction between different protocol layers of a same communication apparatus, optimizing the user plane protocol stack, reducing an invalid transmission or an invalid retransmission of a data packet, improving resource utilization, and reducing impact on an instant transmission of a subsequent data packet.

In a possible implementation, the first protocol layer in the first communication apparatus may further receive a second state report of the second communication apparatus. The second state report includes NACK information of the first data packet or includes ACK information of the first data packet.

In a possible implementation, the first communication apparatus is a network device, and the first protocol layer in the first communication apparatus may further send the first data packet to the first protocol layer in the second communication apparatus. For example, the first protocol layer in the first communication apparatus sends the at least one first PDU to a second protocol layer (for example, a MAC layer) of the first communication apparatus. The second protocol layer in the first communication apparatus receives the at least one first PDU, buffers the at least one first PDU, generates the first data packet based on the at least one first PDU after determining a transmission resource of the at least one first PDU, and sends the first data packet to the second communication apparatus. For example, the second protocol layer in the first communication apparatus may assemble the at least one PDU into a transport block to obtain the first data packet.

In the foregoing implementation, the first protocol layer in the first communication apparatus sends the at least one first PDU to the second protocol layer in the first communication apparatus before the second protocol layer in the first communication apparatus determines the transmission resource of the at least one first PDU. Compared with a solution in which the second protocol layer in the first communication apparatus determines the transmission resource of the at least one first PDU, and sends, to the first protocol layer in the first communication apparatus, a request message used to request the at least one first PDU, and then, the first protocol layer in the first communication apparatus sends the at least one first PDU to the second protocol layer in the first communication apparatus in response to the request message, this implementation can reduce a data processing delay, reduce occupation of an air interface transmission time of a data packet by an interaction delay between protocol layers, and help improve quality of service of a low-latency service.

In a possible implementation, the first communication apparatus is a network device, and the first protocol layer in the first communication apparatus may further send the first data packet to the first protocol layer in the second communication apparatus, and send a third data packet to a third communication apparatus. A cell set in which the second communication apparatus is located is different from a cell set in which the third communication apparatus is located. For example, the first protocol layer in the first communication apparatus duplicates the first PDU to obtain two first PDUs, and sends the two first PDUs to a second protocol layer in the second communication apparatus. After receiving the two first PDUs, the second protocol layer in the second communication apparatus buffers one of the two first PDUs in a first buffer area, and buffers the other first PDU in a second buffer area. Further, after determining the transmission resource of the first PDU, the second protocol layer in the second communication apparatus fetches a first PDU from the first buffer area to assemble a TB and obtain the first data packet, and sends the first data packet to the second communication apparatus; and fetches a first PDU from the second buffer area to assemble a TB and obtain the third data packet, and sends the third data packet to the third communication apparatus.

In the foregoing implementation, enabling the first protocol layer to have a data duplication function helps meet a quality of service requirement of an ultra-low-latency and ultra-high-reliability service.

In a possible implementation, the first communication apparatus is a network device, the first protocol layer in the first communication apparatus may further send the first data packet to the second communication apparatus and the third communication apparatus, and the cell set in which the third communication apparatus is located is different from the cell set in which the second communication apparatus is located. The first protocol layer in the first communication apparatus sends the first data packet to the second protocol layer in the first communication apparatus. The second protocol layer in the first communication apparatus buffers the first data packet, and maintains two state variables corresponding to the first data packet. One of the two state variables indicates whether the first communication apparatus sends the first data packet to the second communication apparatus, and the remaining state variable indicates whether the first communication apparatus sends the first data packet to the third communication apparatus.

In the foregoing implementation, the second protocol layer (for example, the MAC layer) is enabled to maintain a state variable corresponding to a data packet, and the state variable is associated with a plurality of cell sets, to determine a transmission status of the data packet in the plurality of cell sets, and help meet a quality of service requirement of an ultra-low-latency and ultra-high-reliability service.

According to a second aspect, this application provides a communication method. The method may be applied to a first protocol layer in a first communication apparatus. Specifically, the first protocol layer in the first communication apparatus may receive a first state report from a second communication apparatus, where the first state report includes NACK information of a second data packet; and send second indication information to a first protocol layer in the second communication apparatus when a first condition is met, where the second indication information indicates that the second data packet is no longer transmitted; or send the second data packet to the second communication apparatus when a first condition is not met. The first condition is one or more of the following: a discard timer corresponding to the second data packet has expired or a discard timer corresponding to the second data packet does not run; a sequence number of the second data packet is less than a first variable of a transmitting window; or a quantity of retransmissions of the second data packet reaches a maximum quantity of retransmissions. The first variable is a lower edge of the transmitting window.

The first communication apparatus and the second communication apparatus may be terminal devices or network devices. When the first communication apparatus is a terminal device, the second communication apparatus may be a network device or another terminal device. When the first communication apparatus is a network device, the second communication apparatus may be a terminal device. In this embodiment of this application, a function performed by the terminal device may be performed by an apparatus (for example, a chip, a chip system, or a circuit) in the terminal device or an apparatus that can be used together with the terminal device. In this embodiment of this application, a function performed by the network device may be performed by an apparatus (for example, a chip, a chip system, or a circuit) in the network device or an apparatus that can be used together with the network device.

In the foregoing embodiment, the first protocol layer in the first communication apparatus responds to the NACK information of the second data packet, and sends the second indication information to the first protocol layer in the second communication apparatus when determining that the first condition is met, to indicate that the second data packet is no longer transmitted. Compared with a solution in which a PDCP layer sends indication information to an RLC layer, this embodiment can reduce interaction between protocol layers in a same communication apparatus, optimize a user plane protocol stack, reduce a resource waste caused because the RLC layer has delivered, to a lower layer for a retransmission when the RLC layer receives the indication information, a data packet that is no longer transmitted, and improve resource utilization.

Alternatively, the first protocol layer in the first communication apparatus responds to the NACK information of the second data packet, and retransmits the second data packet when determining that the first condition is not met, so that data transmission reliability can be ensured.

In a possible implementation, the first protocol layer in the first communication apparatus may further update the first variable. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach the maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach the maximum quantity of retransmissions.

For example, the first protocol layer in the first communication apparatus may further send third indication information to the first protocol layer in the second communication apparatus. The third indication information indicates that a data packet whose sequence number is less than the updated first variable is no longer transmitted. Alternatively, the second indication information further indicates that a data packet whose sequence number is less than the updated first variable is no longer transmitted.

In the foregoing implementation, the first protocol layer in the first communication apparatus updates the lower edge of the transmitting window, and sends, to the first protocol layer in the second communication apparatus, an indication that the data packet whose sequence number is less than the updated first variable is no longer transmitted, thereby reducing interaction between different protocol layers of a same communication apparatus, optimizing the user plane protocol stack, reducing an invalid transmission or an invalid retransmission of a data packet, improving resource utilization, and reducing impact on an instant transmission of a subsequent data packet.

In a possible implementation, the first protocol layer in the first communication apparatus may further update the quantity of retransmissions of the second data packet when the first condition is not met, to maintain the quantity of retransmissions of the second data packet.

According to a third aspect, this application provides a communication method. The method may be applied to a first protocol layer in a second communication apparatus. Specifically, the method may include: The first protocol layer in the second communication apparatus receives first indication information from a first protocol layer in a first communication apparatus, where the first indication information indicates that a first data packet is no longer transmitted; and updates a second variable of a receiving window based on the first indication information, where an updated second variable is greater than or equal to a sequence number of a data packet that is in the receiving window, that is not completely received, and that is not indicated by the first communication apparatus as being no longer transmitted, and the second variable is a lower edge of the receiving window.

The first communication apparatus and the second communication apparatus may be terminal devices or network devices. When the first communication apparatus is a terminal device, the second communication apparatus may be a network device or another terminal device. When the first communication apparatus is a network device, the second communication apparatus may be a terminal device. In this embodiment of this application, a function performed by the terminal device may be performed by an apparatus (for example, a chip, a chip system, or a circuit) in the terminal device or an apparatus that can be used together with the terminal device. In this embodiment of this application, a function performed by the network device may be performed by an apparatus (for example, a chip, a chip system, or a circuit) in the network device or an apparatus that can be used together with the network device.

In the foregoing embodiment, the first protocol layer in the second communication apparatus may update the second variable of the receiving window in response to the first indication information. In this way, a retransmission of a data packet that is determined by the first communication apparatus as being no longer transmitted can be avoided, to reduce resource consumption, and reduce impact on a timely transmission of a subsequent data packet.

In a possible implementation, the first protocol layer in the second communication apparatus may further send a second state report to the first communication apparatus when a reordering timer of the receiving window expires. The second state report includes NACK information of the first data packet or includes ACK information of the first data packet.

In a possible implementation, that the first protocol layer in the second communication apparatus sends the second state report to the first communication apparatus when the reordering timer of the receiving window expires may be specifically as follows: The first protocol layer in the second communication apparatus sends the second state report to the first communication apparatus when a prohibit timer has expired or a prohibit timer does not run, and the reordering timer of the receiving window expires.

In the foregoing implementation, using the prohibit timer by a receive side may reduce a quantity of times that the receive side sends a state report to a transmit side, and can reduce a resource waste caused by some state reports being useless due to a high frequency of feeding back the state report by the receive side.

In a possible implementation, the first protocol layer in the second communication apparatus may further update a third variable when a sequence number of the first data packet is greater than or equal to the third variable. An updated third variable is the sequence number of the first data packet or is the sequence number of the first data packet plus 1, and the third variable is associated with a maximum value of a sequence number of a data packet received on a receive side, to maintain the third variable.

According to a fourth aspect, this application provides a communication method. The method may be applied to a first protocol layer in a second communication apparatus. Specifically, the method may include: The first protocol layer in the second communication apparatus receives a first data packet from a first communication apparatus; and updates a second variable of a receiving window when the first data packet is completely received and a sequence number of the first data packet is the second variable. An updated second variable is greater than or equal to a sequence number of a data packet that is in the receiving window, that is not completely received, and that is not indicated by the first communication apparatus as being no longer transmitted, and the second variable is a lower edge of the receiving window.

The first communication apparatus and the second communication apparatus may be terminal devices or network devices. When the first communication apparatus is a terminal device, the second communication apparatus may be a network device or another terminal device. When the first communication apparatus is a network device, the second communication apparatus may be a terminal device. In this embodiment of this application, a function performed by the terminal device may be performed by an apparatus (for example, a chip, a chip system, or a circuit) in the terminal device or an apparatus that can be used together with the terminal device. In this embodiment of this application, a function performed by the network device may be performed by an apparatus (for example, a chip, a chip system, or a circuit) in the network device or an apparatus that can be used together with the network device.

In the foregoing embodiment, when a data packet is completely received, and a sequence number of the data packet is the lower edge of the receiving window, the first protocol layer in the second communication apparatus may update the lower edge of the receiving window, and push the lower edge of the receiving window to slide, to reduce impact on timely receiving of a subsequent data packet.

In a possible implementation, the first protocol layer in the second communication apparatus may further update a third variable when the sequence number of the first data packet is greater than the third variable. An updated third variable is the sequence number of the first data packet or is the sequence number of the first data packet plus 1, and the third variable is associated with a maximum value of a sequence number of a data packet received on a receive side, to maintain the third variable.

According to a fifth aspect, this application provides a communication apparatus. The communication apparatus is configured to perform the method according to any one of the first aspect or the second aspect and the possible designs of the first aspect or the second aspect. The communication apparatus is, for example, a first communication apparatus, or a functional module in the first communication apparatus, for example, a baseband apparatus or a chip system.

In a possible design, the communication apparatus includes the baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a sixth aspect, this application provides a communication apparatus. The communication apparatus is configured to perform the method according to any one of the third aspect or the fourth aspect and the possible designs of the third aspect or the fourth aspect. The communication apparatus is, for example, a second communication apparatus, or a functional module in the second communication apparatus, for example, a baseband apparatus or a chip system.

In a possible design manner, the communication apparatus includes the baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a seventh aspect, an embodiment of this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the first aspect or the second aspect and the possible designs of the first aspect or the second aspect, or performs the method according to any one of the third aspect or the fourth aspect and the possible designs of the third aspect or the fourth aspect.

According to an eighth aspect, an embodiment of this application further provides a communication system. The communication system includes one or more of the following: the communication apparatus according to the fifth aspect or the communication apparatus according to the sixth aspect.

According to a ninth aspect, an embodiment of this application provides a computer-readable storage medium. The computer-readable storage medium is configured to store a computer program or instructions, and when the computer program or the instructions are run, the method according to any one of the first aspect or the second aspect and the possible designs of the first aspect or the second aspect is implemented, or the method according to any one of the third aspect or the fourth aspect and the possible designs of the third aspect or the fourth aspect is implemented.

According to a tenth aspect, an embodiment of this application further provides a computer program product including instructions. When the computer program product is run on a computer, the method according to any one of the first aspect or the second aspect and the possible designs of the first aspect or the second aspect is implemented, or the method according to any one of the third aspect or the fourth aspect and the possible designs of the third aspect or the fourth aspect is implemented.

According to an eleventh aspect, an embodiment of this application further provides a chip. The chip is coupled to a memory, and is configured to read and execute program instructions in the memory, so that an apparatus in which the chip is located implements the method according to any one of the first aspect or the second aspect and the possible designs of the first aspect or the second aspect, or implements the method according to any one of the third aspect or the fourth aspect and the possible designs of the third aspect or the fourth aspect.

For technical effects that can be achieved in the fifth aspect to the eleventh aspect, refer to the technical effects that can be achieved in any one of the first aspect to the fourth aspect and the possible designs of the first aspect to the fourth aspect. Details are not described again.

### BRIEF DESCRIPTION OF DRAWINGS

FIG. 1 is a diagram of a user plane protocol stack;
FIG. 2 is a diagram of an architecture of a communication system;
FIG. 3A and FIG. 3B are diagrams of a user plane protocol stack according to an embodiment of this application;
FIG. 4 is a schematic flowchart of a first communication method according to an embodiment of this application;
FIG. 5A to FIG. 5C are diagrams of first indication information according to an embodiment of this application;
FIG. 6 is a diagram of an updated receiving window according to an embodiment of this application;
FIG. 7 is a diagram of another updated receiving window according to an embodiment of this application;
FIG. 8 is a diagram of an updated receiving window according to an embodiment of this application;
FIG. 9 is a schematic flowchart of a second communication method according to an embodiment of this application;
FIG. 10 is a schematic flowchart of a third communication method according to an embodiment of this application;
FIG. 11 is a diagram of a CU-DU split architecture according to an embodiment of this application;
FIG. 12 is a diagram of another CU-DU split architecture according to an embodiment of this application;
FIG. 13 is a diagram of still another CU-DU split architecture according to an embodiment of this application;
FIG. 14 is a diagram of yet another CU-DU split architecture according to an embodiment of this application;
FIG. 15A and FIG. 15B are diagrams of still yet another CU-DU split architecture according to an embodiment of this application;
FIG. 16 is a diagram of a structure of a communication apparatus according to an embodiment of this application;
FIG. 17 is a diagram of a structure of a communication apparatus according to an embodiment of this application; and
FIG. 18 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more. For example, including at least one of A, B, and C means that A, B, C, "A and B", "A and C", "B and C", or "A, B, and C" may be included. "And/or" describes an association relationship between associated objects and three relationships may specifically exist. For example, A and/or B may represent the following three cases: Only A exists, both A and B exist, and only B exists. In addition, the character "/" generally indicates an "or" relationship between the associated objects.

In addition, the terms "system" and "network" in embodiments of this application may be used interchangeably, and "according to" and "based on" may be used interchangeably.

Ordinal numerals such as "first" and "second" in embodiments of this application are usually for distinguishing between different objects, and are not for limiting a sequence, a time sequence, priorities, importance degrees, or the like of a plurality of objects. For example, a first communication apparatus and a second communication apparatus in embodiments of this application are configured to distinguish the two communication apparatuses, and do not limit priorities, importance degrees, or the like of the two communication apparatuses.

Embodiments of this application are presented with respect to a system including a plurality of devices, components, modules, or the like. It should be understood that the system may include other devices, components, modules, or the like that are not mentioned, or may include only a part of devices, components, modules, or the like that are mentioned in embodiments.

The following first describes a communication system to which embodiments of this application are applicable.

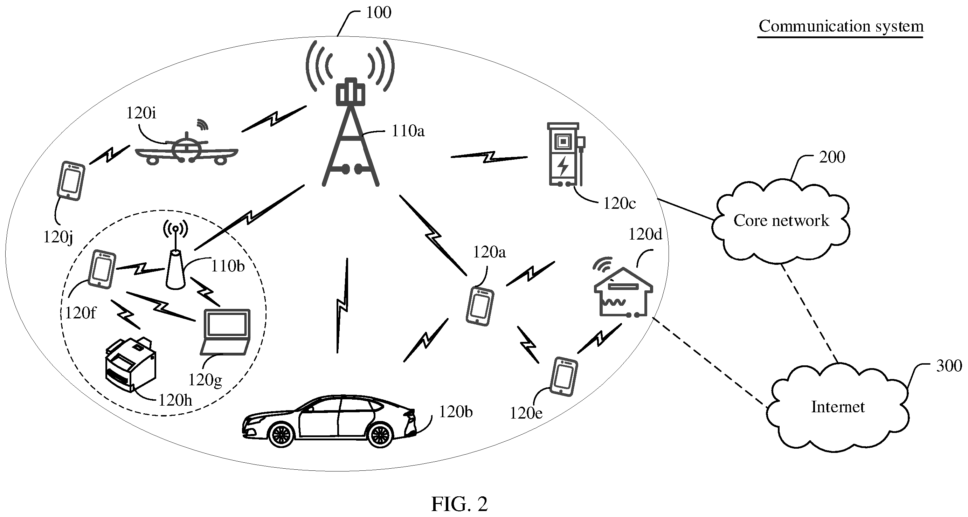

The technical solutions in embodiments of this application may be applied to various communication systems, for example, a universal mobile telecommunications system (universal mobile telecommunications system, UMTS), a wireless local area network (wireless local area network, WLAN), an enhanced mobile broadband (enhanced mobile broadband, eMBB), an ultra-reliable low-latency communications (ultra-reliable low-latency communications, URLLC) system, a machine type communication (machine type communication, MTC) system, a massive machine type communications (massive machine type communications, mMTC) system, an enhanced machine type communication (enhance machine type communication, eMTC) system, an internet of things (internet of things, IoT) communication system, a short-distance wireless communication system (for example, a sidelink (sidelink) system, a wireless fidelity (wireless fidelity, Wi-Fi) system, or a Bluetooth system), a wired network, a vehicle to everything (vehicle to everything, V2X) communication system, a device-to-device (device-to-device, D2D) communication system, augmented reality (augmented reality, AR), virtual reality (virtual reality, VR), an internet of vehicles communication system, a 4th generation (4th generation, 4G) mobile communication system (for example, a long term evolution (long term evolution, LTE) system), an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system (for example, a new radio (new radio, NR) system), a future communication system (for example, a 6th generation (6th generation, 6G) mobile communication system), or another similar communication system. This is not limited. In embodiments of this application, the communication system shown in FIG. 2 is used as an example for description. When the technical solutions in embodiments of this application are applied to another communication system, a device, a component, a module, and the like in embodiments may be replaced with a corresponding device, component, and module in the another communication system. This is not limited.

FIG. 2 is a diagram of an architecture of a communication system to which an embodiment of this application is applicable. As shown in FIG. 2, the communication system includes an access network 100 and a core network 200. Optionally, the communication system may further include an internet 300. The access network 100 may include at least one radio access network (radio access network, RAN) node, for example, 110a and 110b in FIG. 2, and may further include at least one terminal device, for example, 120a to 120j in FIG. 2. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, the mobile phones in FIG. 2 include 120a, 120e, 120f, and 120j. The mobile phone 120a may access the base station 110a, be connected to the vehicle 120b, directly communicate with the mobile phone 120e, and access the HAP. The vehicle 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network of two or more of the foregoing networks.

The RAN device may alternatively be a base station (base station), an evolved NodeB (evolved NodeB, eNodeB), a transmission reception point (transmission reception point, TRP), a next generation NodeB (next generation NodeB, gNB) in a 5G mobile communication system, a base station in a 6G mobile communication system, a base station in a future mobile communication system, an access node in a Wi-Fi system, or the like.

The RAN device may alternatively be a module or a unit that completes a part of functions of the base station, for example, may be a central unit (central unit, CU), may be a distributed unit (distributed unit, DU), or may be a radio unit (radio unit, RU). One CU may be connected to one DU, or one CU may be connected to a plurality of DUs. This can reduce costs and facilitate network expansion. In other words, an access network device may include one CU and one or more DUs. The CU is connected to the DU through an F1 interface, and the CU is connected to the core network through a next generation (next generation, NG) interface. Optionally, the CU may be further split into a CU-control plane (control plane, CP), a CU-user plane (user plane, UP), and the like.

In a possible implementation, the CU may complete functions of a radio resource control protocol (radio resource control, RRC) layer and a PDCP layer of the base station, and may further complete functions of an SDAP layer. The DU may complete functions of an RLC layer and a MAC layer of the base station, and may further complete functions of some or all PHY layers. For specific descriptions of the foregoing protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU (open DU), and the RU may also be referred to as an O-RU (open RU). Any unit in the CU (or the CU-CP or the CU-UP), the DU, and the RU in this application may be implemented by using a software module, a hardware module, or a combination of the software module and the hardware module. It may be understood that the base station may use a CU-DU split architecture, or may not use a CU-DU split architecture. The base station may use a CP-UP split architecture, or may not use a CP-CP split architecture.

The network device may be a macro base station (for example, 110a in FIG. 2), or may be a micro base station or an indoor base station (for example, 110b in FIG. 2), or may be a relay node or a donor node. A specific technology and a specific device form that are used by the network device are not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city.

The terminal device is a user side device having a wireless transceiver function. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. In embodiments of this application, an apparatus configured to implement a function of the terminal device may be the terminal device, or may be an apparatus that supports the terminal device in implementing the function, for example, a chip system or a combined component or part that can implement a function of the terminal device. The apparatus may be installed in the terminal device. A specific technology and a specific device form that are used by the terminal device are not limited in embodiments of this application.

In embodiments of this application, the function of the terminal device may also be performed by a module (for example, a chip or a modem) in the terminal device, or may be performed by an apparatus including the function of the terminal device.

The network device and the terminal device may be fixed at a location, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, the helicopter or the uncrewed aerial vehicle 120i in FIG. 2 may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other according to an interface protocol between network devices. In this case, for 110a, 120i is also a network device. Therefore, both the network device and the terminal device may be collectively referred to as communication apparatuses. 110a and 110b in FIG. 2 each may be referred to as a communication apparatus having a function of a network device, and 120a to 120j in FIG. 2 each may be referred to as a communication apparatus having a function of a terminal device.

Communication between a network device and a terminal device, between network devices, and between terminal devices may be performed by using a licensed spectrum, or may be performed by using an unlicensed spectrum, or may be performed by using both a licensed spectrum and an unlicensed spectrum. This is not limited.

In embodiments of this application, both a transmit side and a receive side may be terminal devices; or a transmit side may be a terminal device, and a receive side may be a network device; or a transmit side may be a network device, and a receive side may be a terminal device. This is not limited.

The following describes technical features in embodiments of this application.

### (1) User plane protocol stack between a transmit side and a receive side

As shown in FIG. 1, the user plane protocol stack between the transmit side and the receive side may include an SDAP layer, a PDCP layer, an RLC layer, a MAC layer, and a PHY layer. Main functions of the SDAP layer are to mark a quality of service (quality of service, QoS) flow identifier in an uplink/downlink data packet, and map a QoS flow onto a data radio bearer (data radio bearer, DRB). A transmission of a data packet on a user plane is mainly completed through the DRB. Based on different QoS flows, data between the transmit side and the receive side may be carried on a plurality of DRBs.

The PDCP layer is located between the SDAP layer and the RLC layer, and provides functions such as a packet forwarding function, a security function (encryption/integrity protection), header compression/data compression, timer-based discarding, sequence number (sequence number, SN) addition, reordering, and in-order delivery on the user plane/control plane.

The RLC layer is located between the PDCP layer and the MAC layer, communicates with the PDCP layer through an RLC channel, communicates with the MAC layer through a logical channel, and provides functions such as a data transfer, RLC SDU segmentation and reassembly, ARQ error correction, and duplicate detection. The RLC layer supports three modes: a transparent mode (transparent mode, TM), an unacknowledged mode (unacknowledged mode, UM), and an acknowledged mode (acknowledged mode, AM).

The TM mode is used to transmit data on a signaling radio bearer 0 (signaling radio bearer 0, SRB 0), paging data, and a broadcast system message. Such a type of message cannot be segmented, and data is transparently transmitted through the RLC layer.

The UM mode is applicable to a real-time service having a high delay requirement and error tolerance. Once a data packet is transmitted by a UM RLC entity, it is considered that such a transmission ends. Even if the data packet is lost during an air interface transmission, the RLC layer does not retransmit the data packet.

The AM mode is applicable to a non-real-time service with a very high reliability requirement, for example, web browsing, file transfer protocol (file transfer protocol, FTP) file downloading, and a signaling transmission. A data transmission loss needs to be avoided as much as possible for such a type of service. An AM RLC entity uses an ARQ mechanism to ensure a lossless data transmission. A basic idea is as follows: An RLC entity on the receive side may send an RLC state report (for example, carried by an RLC control PDU) to the transmit side, to indicate specific data that is successfully received and specific data that is unsuccessfully received. An RLC entity on the transmit side receives the RLC state report, and retransmits, based on the RLC state report, a data packet that is unsuccessfully transmitted.

Main functions of the MAC layer are resource selection, scheduling information reporting, MAC SDU multiplexing and demultiplexing, and a hybrid automatic repeat request (hybrid automatic repeat request, HARQ) transmission of a data packet.

The PHY layer is located at a lowest layer of an air interface protocol stack, and is mainly responsible for coding, modulation, multi-antenna processing, time-frequency resource mapping, and the like.

### (2) Timer-based discarding function on a transmit side

When receiving a PDCP SDU from an upper layer, a PDCP entity on the transmit side starts a discard timer (discardTimer) associated with the PDCP SDU. If discardTimer expires, the PDCP entity on the transmit side discards the PDCP SDU and a corresponding PDCP PDU that are associated with discardTimer. When discardTimer expires, if the PDCP PDU associated with discardTimer has been delivered to a lower layer (for example, an RLC layer), the PDCP entity may send, to an RLC entity, indication information that indicates to discard a corresponding RLC SDU. Correspondingly, if the RLC entity has not delivered the corresponding RLC SDU (or an RLC SDU segment) to a lower layer, the RLC entity may discard the RLC SDU (or the RLC SDU segment) based on the indication information; or if the RLC entity has delivered the corresponding RLC SDU (or an RLC SDU segment) to a lower layer, the RLC entity cannot discard the RLC SDU (or the RLC SDU segment), and may continue to transmit/retransmit the RLC SDU (or the RLC SDU segment).

### (3) Reordering function on a receive side

A PDCP entity on the receive side maintains a receiving window. If sequence numbers of data packets received in the receiving window are inconsecutive (in other words, there is a sequence number hole), a reordering (t-reordering) timer needs to be started to wait for the hole in the receiving window to be filled.

If the t-reordering timer expires, the PDCP entity on the receive side pushes the receiving window to slide, and does not wait for a previously waited group of air interfaces. In other words, the PDCP entity on the receive side no longer continues to wait for a data packet that falls outside the receiving window. Even if the data packet is subsequently received, the PDCP entity on the receive side discards the data packet.

### (4) ARQ function of AM RLC

For a high-reliability but latency-insensitive service, a base station may configure use of AM RLC for a data transmission, and configure a maximum quantity of retransmissions of AM ARQ. If a quantity of retransmissions of an ARQ of an RLC SDU (or an RLC SDU segment) reaches a preconfigured maximum quantity of retransmissions, a radio link failure (radio link failure, RLF) is triggered, and an RRC connection re-establishment process is further triggered.

In a timer-based discarding function on a transmit side, when discardTimer associated with a PDCP SDU of a PDCP entity on the transmit side expires, a PDCP layer is triggered to discard a packet. However, if a data packet at a lower layer has been sent, an air interface transmission of the data packet cannot be terminated. An RLC ARQ transmission (and an HARQ transmission) may continue to be performed on the data packet over an air interface. However, in this case, the air interface transmission is useless, which not only wastes air interface resources, but also causes a receive side to submit, to an upper layer, a data packet that has expired. In a reordering function on the receive side, when a t-reordering timer of a PDCP entity on the receive side expires, the PDCP entity on the receive side is triggered to push a window. A data packet that falls outside a receiving window has expired and is useless, but a retransmission of the data packet cannot be terminated by a lower-layer RLC ARQ (and an HARQ), which causes a waste of resources and hinders a timely transmission of a subsequent data packet.

In view of this, embodiments of this application provide a communication method and apparatus, to optimize a user plane protocol stack, thereby improving resource utilization. The method and the apparatus in this application are based on a same technical concept. Because the method and the apparatus have similar principles for resolving a problem, mutual reference may be made between implementations of the apparatus and the method. Repeated parts are not described in detail again.

The following first describes technical terms in embodiments of this application.

### (1) First communication apparatus and second communication apparatus

The first communication apparatus may be a transmit side of a data packet, may be a network device or a component (for example, a chip, a chip system, or a circuit) in the network device, or may be a terminal device or a component (for example, a chip, a chip system, or a circuit) in the terminal device. For the network device and the terminal device, refer to related descriptions in FIG. 2. Details are not described again.

The second communication apparatus may be a receive side of the data packet, may be a network device or a component (for example, a chip, a chip system, or a circuit) in the network device, or may be a terminal device or a component (for example, a chip, a chip system, or a circuit) in the terminal device. For the network device and the terminal device, refer to related descriptions in FIG. 2. Details are not described again.

For example, the first communication apparatus may be a terminal device or a component in the terminal device, and the second communication apparatus may be a terminal device or a component in the terminal device; or the first communication apparatus may be a terminal device or a component in the terminal device, and the second communication apparatus may be a network device or a component in the network device; or the first communication apparatus may be a network device or a component in the network device, and the second communication apparatus may be a terminal device or a component in the terminal device.

### (2) Data packet

The data packet may be an SDU, or may be a PDU. This is not limited. In embodiments of this application, the data packet may be a complete data packet, or may be a segment of a data packet. For brevity, the following provides descriptions by using the data packet as an example. It should be understood that the data packet in the following descriptions may also be replaced with a data packet segment. A type of data included in the data packet is not limited in embodiments of this application.

### (3) First protocol layer

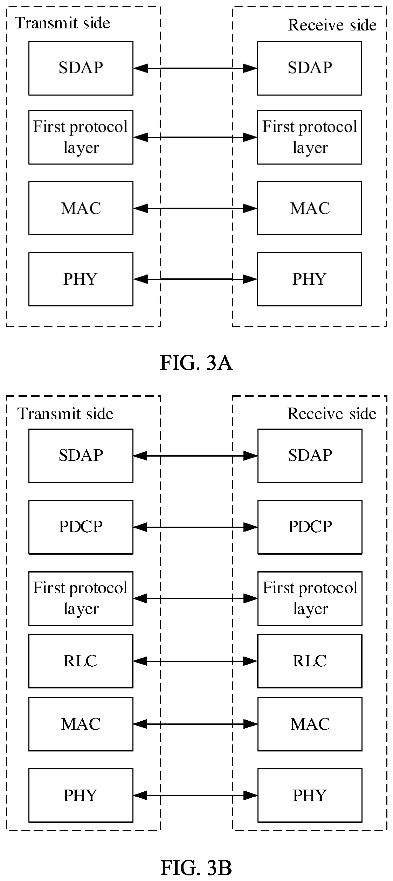

A method provided in embodiments of this application may be implemented by a first protocol layer. The first protocol layer may also be referred to as an aggregation layer, a layer 2 (layer 2, 12) aggregation layer, an integration layer, a first protocol entity, or the like. In a possible implementation, the first protocol layer may replace a PDCP layer and an RLC layer, have a function of the PDCP layer and a function of the RLC layer, and may be located between an SDAP layer and a MAC layer, as shown in FIG. 3A. In another possible implementation, the first protocol layer may be an enhanced PDCP layer, and has a function of the PDCP layer. In another possible implementation, the first protocol layer may be an enhanced RLC layer, and has a function of the RLC layer. In yet another possible implementation, the first protocol layer may be independently deployed, and may be located between a PDCP layer and an RLC layer, as shown in FIG. 3B. It may be understood that a location of the first protocol layer shown in FIG. 3B is used as an example, and this is not limited in embodiments of this application. For example, the first protocol layer may be located between an RLC layer and a MAC layer, or the first protocol layer may replace some or all functions of the PDCP layer, the RLC layer, and the SDAP layer.

### (4) Transmitting window

The transmitting window may also be referred to as a transmit side queue, or the like. This is not limited. The transmitting window may be understood as a segment of consecutive sequence numbers or a sequence number range on a transmit side, or may be understood as a queue of data packets on the transmit side. For brevity, the following provides descriptions by using an example in which the transmitting window is a segment of consecutive sequence numbers. The transmit side sends, to a receive side, only a data packet whose sequence number falls in the transmitting window.

The transmitting window involves two variables that are denoted as Tx_lower and Tx_high. Tx_lower may also be referred to as a first variable, a transmit side low sequence number, or the like, and is used to identify a lower edge of the transmitting window. During initialization, Tx_lower may be 0 or 1. This is not limited. Tx_high may also be referred to as a transmit side high sequence number, or the like, and is used to identify an upper edge of the transmitting window. For example, Tx_high may be a sum of Tx_lower and a length (for example, denoted as window sizel) of the transmitting window. That is, Tx_high=Tx_lower+window size1. Herein, window size1 may be predefined, or may be preconfigured. This is not limited. For example, if Tx_lower is 0 and window size1 is 6, Tx_high may be 6, and the transmitting window may include {SN 0, SN 1, SN 2, SN 3, SN 4, SN 5, SN 6}.

### (5) Receiving window

The receiving window may also be referred to as a receive side queue, or the like. This is not limited. The receiving window may be understood as a segment of consecutive sequence numbers or a sequence number range on a receive side, or may be understood as a queue of data packets received on the receive side. For brevity, the following provides descriptions by using an example in which the receiving window is a segment of consecutive sequence numbers. The receive side receives or processes only a data packet whose sequence number falls in the receiving window. For details, refer to the related descriptions of the reordering function of the receive side. Details are not described again.

The receiving window involves three variables that are denoted as Rx_lower, Rx_high, and Rx_highest. Rx_lower may also be referred to as a second variable, a receive side low variable, or the like, and is used to identify a lower edge of the receiving window. During initialization, Rx_lower may be 0 or 1. This is not limited. Rx_high may also be referred to as a receive side high sequence number, or the like, and is used to identify an upper edge of the receiving window. For example, Rx_high may be a sum of Rx_lower and a length (for example, denoted as window size2) of the receiving window. That is, Rx_high=Rx_lower+window size2. Herein, window size2 may be predefined, or may be preconfigured. This is not limited. For example, if Rx_lower is 1 and window size1 is 4, Rx_high may be 5, and the receiving window may include {SN 1, SN 2, SN 3, SN 4, SN 5}. Rx_highest may also be referred to as a third variable, or the like, and is used to associate a maximum value of a sequence number of the data packet received on the receive side. For example, Rx_highest may be a largest sequence number of the data packet received on the receive side plus 1. For example, if the largest sequence number of the data packet received by the receive side is 3, Rx_highest may be 4.

In addition, the term "first protocol layer" in the following descriptions may be replaced with "first protocol entity", "first protocol layer entity", or the like.

The following describes a communication method provided in embodiments of this application.

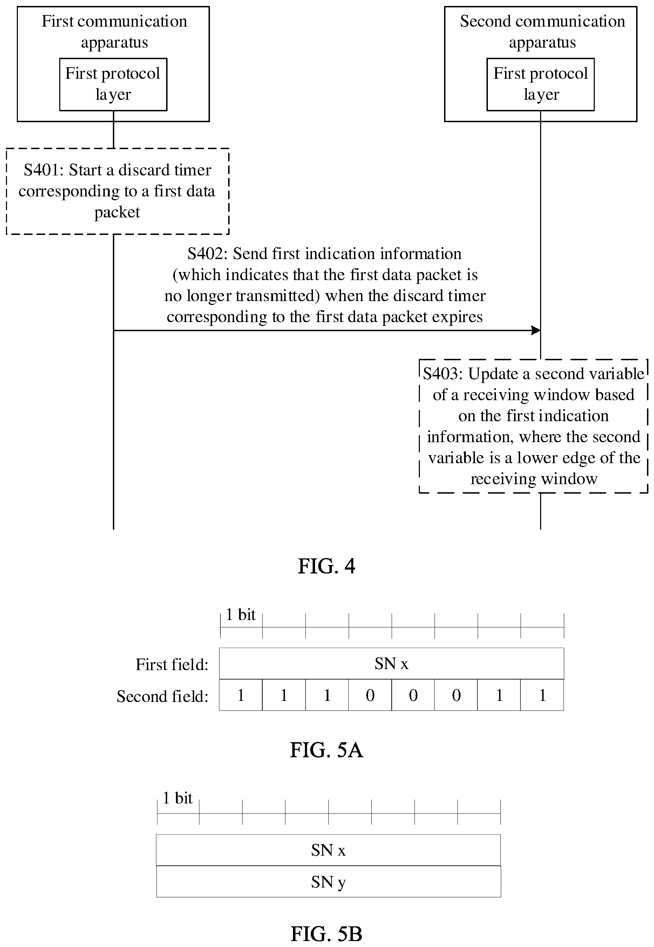

FIG. 4 is an example schematic flowchart of a first communication method according to an embodiment of this application. In this embodiment, in response to expiry of a discard timer corresponding to a first data packet, a transmit side indicates, to a receive side, a data packet that is no longer transmitted. Specifically, as shown in FIG. 4, the method may include the following content.

S401: A first protocol layer in a first communication apparatus starts a discard timer corresponding to a first data packet.

S401 is an optional step, and is represented by a dashed line in FIG. 4. For example, the first protocol layer in the first communication apparatus may receive a first data packet from an upper layer (for example, an SDAP layer or a PDCP layer), and start the discard timer corresponding to the first data packet. There may be one or more first data packets. This is not limited. One or more data packets may be associated with a same discard timer. In other words, one discard timer may manage whether one or more data packets need to be discarded. For the first protocol layer, refer to the related descriptions in FIG. 3A and FIG. 3B. Details are not described again.

Optionally, the first protocol layer in the first communication apparatus may allocate a sequence number to the first data packet. Optionally, after performing corresponding processing on the first data packet, the first protocol layer in the first communication apparatus may deliver the first data packet to a lower layer (for example, a MAC layer or an RLC layer) for a transmission. Optionally, the sequence number of the first data packet belongs to a transmitting window. In other words, the transmitting window includes the sequence number of the first data packet.

It may be understood that the related content in S401 may be performed by the first protocol layer in the first communication apparatus, or may be performed by one or more other protocol layers of the first communication apparatus, or may be performed by the first protocol layer and one or more other protocol layers of the first communication apparatus. This is not limited.

In this embodiment, the first protocol layer in the first communication apparatus may maintain the discard timer corresponding to the first data packet. The first protocol layer in the first communication apparatus may perform a transmission or a retransmission of the first data packet when the discard timer corresponding to the first data packet does not expire. For example, the first communication apparatus sends the first data packet (not shown in FIG. 4) to a second communication apparatus, and the second communication apparatus attempts to receive the first data packet. The first data packet may be successfully received, or the first data packet may be unsuccessfully received. This is not limited. Further, the first communication apparatus may retransmit the first data packet if the second communication apparatus unsuccessfully receives the first data packet. It should be noted that, in this embodiment of this application, a maximum quantity of retransmissions of a data packet may be predefined, or may be preconfigured. This is not limited.

Alternatively, when the discard timer corresponding to the first data packet expires, the first protocol layer in the first communication apparatus may discard the first data packet, and send first indication information to a first protocol layer in the second communication apparatus, that is, perform content in S402.

S402: The first protocol layer in the first communication apparatus sends the first indication information to the first protocol layer in the second communication apparatus when the discard timer corresponding to the first data packet expires.

Correspondingly, the first protocol layer in the second communication apparatus receives the first indication information from the first protocol layer in the first communication apparatus.

The first indication information may indicate that the first data packet is no longer transmitted, which is alternatively expressed as that the first indication information may indicate that the first communication apparatus no longer sends the first data packet; or expressed as that the first indication information may indicate that the first data packet has been discarded. For example, a content format of the first indication information may have the following several implementations, but is not limited thereto. The following describes the several implementations.

Implementation 1: The first indication information may include a first field and a second field, the first field may indicate that the first data packet is no longer transmitted, and the second field may indicate whether N data packets whose sequence numbers are after the sequence number of the first data packet continue to be transmitted. A value of an n^{th} bit in the second field may include a first value and a second value. When a value of the second field is the first value, the n^{th} bit indicates that a data packet whose sequence number is the sequence number of the first data packet plus n is no longer transmitted; or when a value of the second field is the second value, the n^{th} bit indicates that a data packet whose sequence number is the sequence number of the first data packet plus n continues to be transmitted. Herein, n is an integer greater than 0 and less than or equal to N. N is a positive integer.

For example, it is assumed that the sequence number of the first data packet is x, and is denoted as SN x. The first field may include the SN x, and indicates that a data packet with SN x is no longer transmitted, as shown in FIG. 5A. The second field may be referred to as a bitmap (bitmap). When a value of a 1^{st} bit of the bitmap is 0, it indicates that a data packet whose sequence number is (x+1) continues to be transmitted; or when a value of a 1^{st} bit of the bitmap is 1, it indicates that a data packet whose sequence number is (x+1) is no longer transmitted. When a value of a 2^{nd} bit of the bitmap is 0, it indicates that a data packet whose sequence number is (x+2) continues to be transmitted; or when a value of a 2^{nd} bit of the bitmap is 1, it indicates that a data packet whose sequence number is (x+2) is no longer transmitted. For other data packets, deduction is performed by analogy, and examples are not listed one by one. An example in which N is 8 is used in FIG. 5A.

In an implementation, the first protocol layer in the first communication apparatus may determine, based on one or more of the following: a discard timer corresponding to a data packet does not expire, a quantity of retransmissions of the data packet does not reach the maximum quantity of retransmissions, or a sequence number of the data packet is located in the transmitting window, that the data packet continues to be transmitted. In an implementation, the first protocol layer in the first communication apparatus may determine, based on one or more of the following: a discard timer corresponding to a data packet has expired (or a discard timer corresponding to a data packet does not run), a quantity of retransmissions of the data packet reaches the maximum quantity of retransmissions, or a sequence number of the data packet is outside the transmitting window, that the data packet is no longer transmitted.

Implementation 2: The first indication information may include the sequence number of the first data packet, to indicate that the first data packet is no longer transmitted, as shown in FIG. 5B. In FIG. 5B, there are two first data packets, sequence numbers of the two data packets are x (denoted as SN x) and y (denoted as SN y), and the first indication information includes SN x and SN y, which indicates that both a data packet with SN x and a data packet with SN y are no longer transmitted.

Implementation 3: The first indication information may include one or more groups of fields, one of the one or more groups of fields may include a third field and a fourth field, the third field may indicate that a data packet is no longer transmitted, and the fourth field may indicate a quantity of consecutive data packets that are no longer transmitted starting from a sequence number of the data packet, or indicate a quantity of consecutive data packets that are no longer transmitted starting from a 1^{st} sequence number (namely, a sequence number of the data packet plus 1) after the sequence number of the data packet. It may be understood that, all data packets indicated by the one or more groups of fields may be first data packets. In other words, there are a plurality of first data packets. Alternatively, data packets indicated by the one or more groups of fields may include the first data packet and a data packet that is determined by the first protocol layer in the first communication apparatus as being no longer transmitted. This is not limited. For the data packet that is determined by the first protocol layer in the first communication apparatus as being no longer transmitted, refer to the foregoing content. Details are not described again.

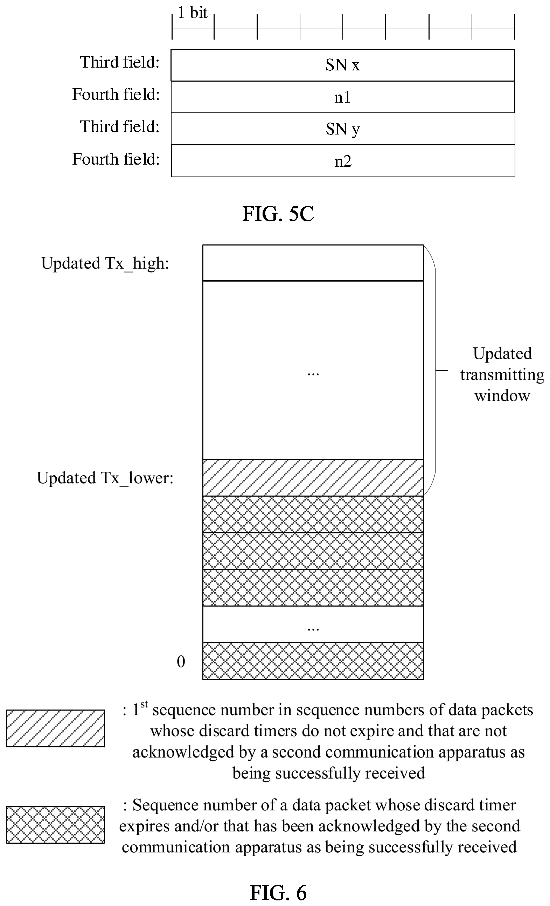

For example, the first indication information includes two groups of fields. A third field in a 1^{st} group of fields includes SN x, which indicates that a data packet with SN x is no longer transmitted. A fourth field in the 1^{st} group of fields includes n1, which indicates that n1 consecutive data packets whose sequence numbers start from x are no longer transmitted, that is, (n1-1) data packets whose sequence numbers are (x+1), ..., and (x+n1-1) are no longer transmitted (or n1 indicates that n1 consecutive data packets whose sequence numbers start from x+1 are no longer transmitted, that is, n1 data packets whose sequence numbers are (x+1), ..., and (x+n1) are no longer transmitted). A third field in a 2^{nd} group of fields includes SN y, which indicates that a data packet with SN y is no longer transmitted. A fourth field in the 2^{nd} group includes n2, which indicates that n2 consecutive data packets whose sequence numbers start from SN y are no longer transmitted, that is, (n2-1) data packets whose sequence numbers are (y+1), ..., and (y+n2-1) are no longer transmitted (or n2 indicates that n2 consecutive data packets whose sequence numbers start from y+1 are no longer transmitted, that is, n2 data packets whose sequence numbers are (y+1), ..., and (y+n2) are no longer transmitted), as shown in FIG. 5C. Herein, n1 and n2 are both positive integers.

In the foregoing implementation, the first indication information may indicate, in a plurality of manners, a data packet that is no longer transmitted, and flexibility is high.

In S402, the first protocol layer in the first communication apparatus discards the first data packet in response to expiry of the discard timer corresponding to the first data packet, and sends the first indication information to the first protocol layer in the second communication apparatus, to indicate that the first data packet is no longer transmitted. Compared with a solution in which a PDCP layer sends indication information to an RLC layer, this embodiment can reduce interaction between protocol layers in a same communication apparatus, optimize a user plane protocol stack, reduce a resource waste caused because the RLC layer has delivered, to a lower layer for a transmission or a retransmission when the RLC layer receives the indication information, a data packet that is no longer transmitted, and improve resource utilization.

In a possible implementation, when the discard timer corresponding to the first data packet expires, the first protocol layer in the first communication apparatus may further update (or modify, or the like) a first variable of the transmitting window, that is, update Tx_lower, which is not shown in FIG. 4. Updating the first variable of the transmitting window may also be referred to as updating the transmitting window. Tx_high of an updated transmitting window may remain unchanged, or may be a sum of updated Tx_lower and window size1. This is not limited. The first communication apparatus sends, to the second communication apparatus, only a data packet whose sequence number is in the updated transmitting window. For example, updated Tx_lower may include the following several implementations. The following describes the several implementations.

Implementation 1: Updated Tx_lower may be a smallest sequence number in sequence numbers of data packets that are in the transmitting window, that are not acknowledged by the second communication apparatus as being successfully received, and whose discard timers do not expire; or updated Tx_lower may be a 1^{st} sequence number in sequence numbers of data packets that are in the transmitting window, that are not acknowledged by the second communication apparatus as being successfully received, and whose discard timers do not expire. The 1^{st} sequence number is a 1^{st} sequence number in sequence numbers in ascending order. The 1^{st} sequence number may alternatively be expressed as a last sequence number in sequence numbers in descending order. For ease of understanding, the following provides descriptions by using the 1^{st} sequence number in sequence numbers in ascending order as an example.

It may be understood that, if there is one data packet that is in the transmitting window, that is not acknowledged by the second communication apparatus as being successfully received, and whose discard timer does not expire, updated Tx_lower may be a sequence number of the data packet; or if there are a plurality of data packets that are in the transmitting window, that are not acknowledged by the second communication apparatus as being successfully received, and whose discard timers do not expire, updated Tx_lower may be a smallest sequence number in sequence numbers of the plurality of data packets.

A data packet that is acknowledged by the second communication apparatus as being successfully received may be understood as that the first communication apparatus receives acknowledgment (acknowledgment, ACK) information of the data packet from the second communication apparatus. A data packet that is not acknowledged by the second communication apparatus as being successfully received may be understood as that the first communication apparatus has not received ACK information of the data packet from the second communication apparatus. Optionally, the first communication apparatus may receive negative acknowledgment (negative acknowledgment, NACK) information of the data packet from the second communication apparatus. In this case, the data packet may also be referred to as a data packet that is not acknowledged by the second communication apparatus as being successfully received.

For example, it is assumed that the transmitting window is {SN 0, SN 1, SN 2, SN 3, SN 4, SN 5, SN 6}, Tx_lower is 0, Tx_high is 6, and the sequence number of the first data packet is 0 (that is, a discard timer corresponding to a data packet with SN 0 expires). If a discard timer corresponding to a data packet with SN 1 has expired (or does not run), both a data packet with SN 2 and a data packet with SN 3 have been acknowledged by the second communication apparatus as being successfully received, and none of a data packet with SN 4, a data packet with SN 5, and a data packet with SN 6 is acknowledged by the second communication apparatus as being successfully received and corresponding discard timers do not expire, updated Tx_lower is a smallest sequence number in SN 4, SN 5, and SN 6, that is, updated Tx_lower is 4. Correspondingly, the updated transmitting window may be {SN 4, SN 5, SN 6, SN 7, SN 8, SN 9, SN 10}.

For another example, it is assumed that the transmitting window is {SN 0, SN 1, SN 2, SN 3, SN 4, SN 5, SN 6}, Tx_lower is 0, Tx_high is 6, and the sequence number of the first data packet is 1 (that is, a discard timer corresponding to a data packet with SN 1 expires). If both a data packet with SN 0 and a data packet with SN 3 have been acknowledged by the second communication apparatus as being successfully received, a discard timer corresponding to a data packet with SN 2 has expired (or does not run), and none of a data packet with SN 4, a data packet with SN 5, and a data packet with SN 6 is acknowledged by the second communication apparatus as being successfully received and corresponding discard timers do not expire, updated Tx_lower is a smallest sequence number in SN 4, SN 5, and SN 6, that is, updated Tx_lower is 4. Correspondingly, the updated transmitting window may be {SN 4, SN 5, SN 6, SN 7, SN 8, SN 9, SN 10}.

For still another example, it is assumed that the transmitting window is {SN 0, SN 1, SN 2, SN 3, SN 4, SN 5, SN 6}, Tx_lower is 0, Tx_high is 6, and the sequence number of the first data packet is 1 (that is, a discard timer corresponding to a data packet with SN 1 expires). If both a data packet with SN 2 and a data packet with SN 3 have been acknowledged by the second communication apparatus as being successfully received, and none of a data packet with SN 0, a data packet with SN 4, a data packet with SN 5, and a data packet with SN 6 is acknowledged by the second communication apparatus as being successfully received and corresponding discard timers do not expire, updated Tx_lower is a smallest sequence number in SN 0, SN 4, SN 5, and SN 6, that is, updated Tx_lower is still 0. Correspondingly, the updated transmitting window may be still {SN 0, SN 1, SN 2, SN 3, SN 4, SN 5, SN 6}.

For example, when the sequence number of the first data packet is not the first variable (that is, is not Tx_lower), and a data packet with Tx_lower is not acknowledged by the second communication apparatus as being successfully received and a corresponding discard timer does not expire, Tx_lower before updating and Tx_lower after updating are the same; or when there are a plurality of first data packets, sequence numbers of the plurality of first data packets do not include the first variable (that is, do not include Tx_lower), and a data packet with Tx_lower is not acknowledged by the second communication apparatus as being successfully received and a corresponding discard timer does not expire, Tx_lower before updating and Tx_lower after updating are the same. Optionally, in this case, the first protocol layer in the first communication apparatus may not update Tx_lower. This is not limited.

FIG. 6 is an example diagram of an updated transmitting window. In FIG. 6, updated Tx_lower is a 1^{st} sequence number in sequence numbers of data packets that are in the transmitting window, that are not acknowledged by the second communication apparatus as being successfully received, and whose discard timers do not expire. In addition, a data packet whose sequence number is less than updated Tx_lower may include one or more of the following: a data packet whose discard timer has expired (or a data packet whose discard timer does not run), or a data packet that has been acknowledged by the second communication apparatus as being successfully received.

Implementation 2: Updated Tx_lower may be a smallest sequence number in sequence numbers of data packets that are in the transmitting window, that are not acknowledged by the second communication apparatus as being successfully received, and whose quantities of retransmissions do not reach the maximum quantity of retransmissions; or updated Tx_lower may be a 1^{st} sequence number in sequence numbers of data packets that are in the transmitting window, that are not acknowledged by the second communication apparatus as being successfully received, and whose quantities of retransmissions do not reach the maximum quantity of retransmissions. For descriptions of the 1^{st} sequence number, refer to the foregoing content. Details are not described again.

It may be understood that, if there is one data packet that is in the transmitting window, that is not acknowledged by the second communication apparatus as being successfully received, and whose quantity of retransmissions does not reach the maximum quantity of retransmissions, updated Tx_lower may be a sequence number of the data packet; or if there are a plurality of data packets that are in the transmitting window, that are not acknowledged by the second communication apparatus as being successfully received, and whose quantities of retransmissions do not reach the maximum quantity of retransmissions, updated Tx_lower may be a smallest sequence number in sequence numbers of the plurality of data packets.

For example, it is assumed that the transmitting window is {SN 0, SN 1, SN 2, SN 3, SN 4, SN 5, SN 6}, Tx_lower is 0, Tx_high is 6, and the sequence number of the first data packet is 0 (that is, a discard timer corresponding to a data packet with SN 0 expires). If a quantity of retransmissions of a data packet with SN 1 reaches the maximum quantity of retransmissions, both a data packet with SN 2 and a data packet with SN 3 have been acknowledged by the second communication apparatus as being successfully received, and none of a data packet with SN 4, a data packet with SN 5, and a data packet with SN 6 is acknowledged by the second communication apparatus as being successfully received and quantities of retransmissions do not reach the maximum quantity of retransmissions, updated Tx_lower is a smallest sequence number in SN 4, SN 5, and SN 6, that is, updated Tx_lower is 4. Correspondingly, the updated transmitting window may be {SN 4, SN 5, SN 6, SN 7, SN 8, SN 9, SN 10}.

For another example, it is assumed that the transmitting window is {SN 0, SN 1, SN 2, SN 3, SN 4, SN 5, SN 6}, Tx_lower is 0, Tx_high is 6, and the sequence number of the first data packet is 1 (that is, a discard timer corresponding to a data packet with SN 1 expires). If a quantity of retransmissions of a data packet with SN 0 reaches the maximum quantity of retransmissions, both a data packet with SN 2 and a data packet with SN 3 have been acknowledged by the second communication apparatus as being successfully received, and none of a data packet with SN 4, a data packet with SN 5, and a data packet with SN 6 is acknowledged by the second communication apparatus as being successfully received and quantities of retransmissions do not reach the maximum quantity of retransmissions, updated Tx_lower is a smallest sequence number in SN 4, SN 5, and SN 6, that is, updated Tx_lower is 4. Correspondingly, the updated transmitting window is {SN 4, SN 5, SN 6, SN 7, SN 8, SN 9, SN 10}.

For still another example, it is assumed that the transmitting window is {SN 0, SN 1, SN 2, SN 3, SN 4, SN 5, SN 6}, Tx_lower is 0, Tx_high is 6, and the sequence number of the first data packet is 1 (that is, a discard timer corresponding to a data packet with SN 1 expires). If both a data packet with SN 2 and a data packet with SN 3 have been acknowledged by the second communication apparatus as being successfully received, and none of a data packet with SN 0, a data packet with SN 4, a data packet with SN 5, and a data packet with SN 6 is acknowledged by the second communication apparatus as being successfully received and quantities of retransmissions do not reach the maximum quantity of retransmissions, updated Tx_lower is a smallest sequence number in SN 0, SN 4, SN 5, and SN 6, that is, updated Tx_lower is still 0. Correspondingly, the updated transmitting window may be still {SN 0, SN 1, SN 2, SN 3, SN 4, SN 5, SN 6}.

For example, when the sequence number of the first data packet is not the first variable (that is, is not Tx_lower), and a data packet with Tx_lower is not acknowledged by the second communication apparatus as being successfully received and a quantity of retransmissions does not reach the maximum quantity of retransmissions, Tx_lower before updating and Tx_lower after updating are the same; or when there are a plurality of first data packets, sequence numbers of the plurality of first data packets do not include the first variable (that is, do not include Tx_lower), and a data packet with Tx_lower is not acknowledged by the second communication apparatus as being successfully received and a quantity of retransmissions does not reach the maximum quantity of retransmissions, Tx_lower before updating and Tx_lower after updating are the same. Optionally, in this case, the first protocol layer in the first communication apparatus may not update Tx_lower. This is not limited.

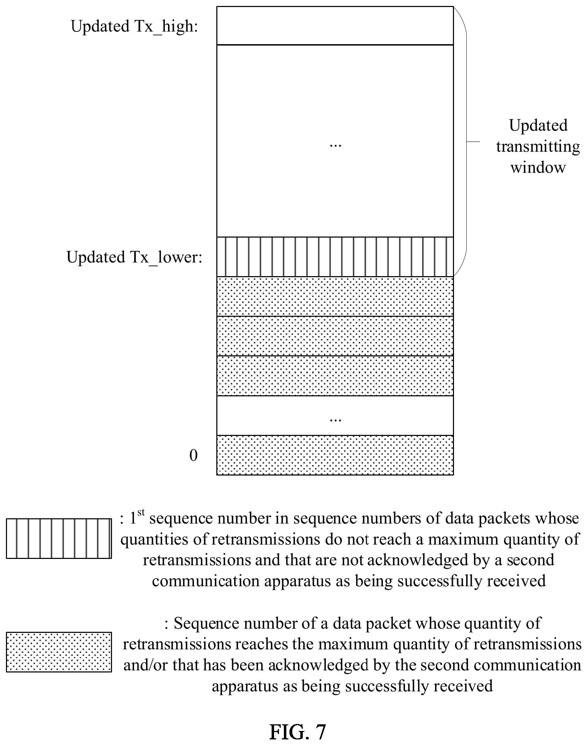

FIG. 7 is an example diagram of an updated transmitting window. In FIG. 7, updated Tx_lower is a 1^{st} sequence number in sequence numbers of data packets that are in the transmitting window, that are not acknowledged by the second communication apparatus as being successfully received, and whose quantities of retransmissions do not reach the maximum quantity of retransmissions. In addition, a data packet whose sequence number is less than updated Tx_lower may include one or more of the following: a data packet whose quantity of retransmissions reaches the maximum quantity of retransmissions, or a data packet that has been acknowledged by the second communication apparatus as being successfully received.

Implementation 3: Updated Tx_lower may be a smallest sequence number in sequence numbers of data packets that are in the transmitting window, that are not acknowledged by the second communication apparatus as being successfully received, whose discard timers do not expire, and whose quantities of retransmissions do not reach the maximum quantity of retransmissions; or updated Tx_lower may be a 1^{st} sequence number in sequence numbers of data packets that are in the transmitting window, that are not acknowledged by the second communication apparatus as being successfully received, whose discard timers do not expire, and whose quantities of retransmissions do not reach the maximum quantity of retransmissions. For descriptions of the 1^{st} sequence number, refer to the foregoing content. Details are not described again.

It may be understood that, if there is one data packet that is in the transmitting window, that is not acknowledged by the second communication apparatus as being successfully received, whose discard timer does not expire, and whose quantity of retransmissions does not reach the maximum quantity of retransmissions, updated Tx_lower may be a sequence number of the data packet; or if there are a plurality of data packets that are in the transmitting window, that are not acknowledged by the second communication apparatus as being successfully received, whose discard timers do not expire, and whose quantities of retransmissions do not reach the maximum quantity of retransmissions, updated Tx_lower may be a smallest sequence number in sequence numbers of the plurality of data packets.

For example, it is assumed that the transmitting window is {SN 0, SN 1, SN 2, SN 3, SN 4, SN 5, SN 6, SN 7, SN 8}, Tx_lower is 0, Tx_high is 8, and the sequence number of the first data packet is 0 (that is, a discard timer corresponding to a data packet with SN 0 expires). If a discard timer corresponding to a data packet with SN 1 has expired (or does not run), both a data packet with SN 2 and a data packet with SN 3 have been acknowledged by the second communication apparatus as being successfully received, a discard timer corresponding to a data packet with SN 5 has expired (or does not run), a quantity of retransmissions of a data packet with SN 6 reaches the maximum quantity of retransmissions, and none of a data packet with SN 4, a data packet with SN 7, and a data packet with SN 8 has been acknowledged by the second communication apparatus as being successfully received, corresponding discard timers do not expire, and quantities of retransmissions do not reach the maximum quantity of retransmissions, updated Tx_lower is a smallest sequence number in SN 4, SN 7, and SN 8, that is, updated Tx_lower is 4. Correspondingly, the updated transmitting window may be {SN 4, SN 5, SN 6, SN 7, SN 8, SN 9, SN 10, SN 11, SN 12}.

For another example, it is assumed that the transmitting window is {SN 0, SN 1, SN 2, SN 3, SN 4, SN 5, SN 6, SN 7, SN 8}, Tx_lower is 0, Tx_high is 8, and the sequence number of the first data packet is 3 (that is, a discard timer corresponding to a data packet with SN 3 expires). If a quantity of retransmissions of a data packet with SN 0 is greater than the maximum quantity of retransmissions, both a data packet with SN 1 and a data packet with SN 2 have been acknowledged by the second communication apparatus as being successfully received, a discard timer corresponding to a data packet with SN 5 has expired (or does not run), a quantity of retransmissions of a data packet with SN 6 reaches the maximum quantity of retransmissions, and none of a data packet with SN 4, a data packet with SN 7, and a data packet with SN 8 has been acknowledged by the second communication apparatus as being successfully received, corresponding discard timers do not expire, and quantities of retransmissions do not reach the maximum quantity of retransmissions, updated Tx_lower is a smallest sequence number in SN 4, SN 7, and SN 8, that is, updated Tx_lower is 4. Correspondingly, the updated transmitting window may be {SN 4, SN 5, SN 6, SN 7, SN 8, SN 9, SN 10, SN 11, SN 12}.

For still another example, it is assumed that the transmitting window is {SN 0, SN 1, SN 2, SN 3, SN 4, SN 5, SN 6, SN 7, SN 8}, Tx_lower is 0, Tx_high is 8, and the sequence number of the first data packet is 3 (that is, a discard timer corresponding to a data packet with SN 3 expires). If both a data packet with SN 1 and a data packet with SN 2 have been acknowledged by the second communication apparatus as being successfully received, a discard timer corresponding to a data packet with SN 5 has expired (or does not run), a quantity of retransmissions of a data packet with SN 6 reaches the maximum quantity of retransmissions, and none of a data packet with SN 0, a data packet with SN 4, a data packet with SN 7, and a data packet with SN 8 has been acknowledged by the second communication apparatus as being successfully received, corresponding discard timers do not expire, and quantities of retransmissions do not reach the maximum quantity of retransmissions, updated Tx_lower is a smallest sequence number in SN 0, SN 4, SN 7, and SN 8, that is, updated Tx_lower is still 0. Correspondingly, the updated transmitting window may be still {SN 0, SN 1, SN 2, SN 3, SN 4, SN 5, SN 6, SN 7, SN 8}.

For example, when the sequence number of the first data packet is not the first variable (that is, is not Tx_lower), and a data packet with Tx_lower is not acknowledged by the second communication apparatus as being successfully received, a corresponding discard timer does not expire, and a quantity of retransmissions does not reach the maximum quantity of retransmissions, Tx_lower before updating and Tx_lower after updating are the same; or when there are a plurality of first data packets, sequence numbers of the plurality of first data packets do not include the first variable (that is, do not include Tx_lower), and a data packet with Tx_lower is not acknowledged by the second communication apparatus as being successfully received, a corresponding discard timer does not expire, and a quantity of retransmissions does not reach the maximum quantity of retransmissions, Tx_lower before updating and Tx_lower after updating are the same. Optionally, in this case, the first protocol layer in the first communication apparatus may not update Tx_lower. This is not limited.

In Implementation 3, updated Tx_lower is a 1^{st} sequence number in sequence numbers of data packets that are in the transmitting window, that are not acknowledged by the second communication apparatus as being successfully received, whose discard timer does not expire, and whose quantities of retransmissions do not reach the maximum quantity of retransmissions. In addition, a data packet whose sequence number is less than updated Tx_lower may include one or more of the following: a data packet whose discard timer has expired (or does not run) and whose quantity of retransmissions reaches the maximum quantity of retransmissions, or a data packet that has been acknowledged by the second communication apparatus as being successfully received.

In an implementation, the first indication information may further indicate that a data packet whose sequence number is less than updated Tx_lower is no longer transmitted. Optionally, the first indication information may include updated Tx_lower, which indicates that a data packet whose sequence number is less than updated Tx_lower is no longer transmitted. For example, the first indication information includes the sequence number of the first data packet and updated Tx_lower, which indicates that the first data packet is no longer transmitted and a data packet whose sequence number is less than updated Tx_lower is no longer transmitted. For another example, in consideration that the sequence number of the first data packet is less than updated Tx_lower, the first indication information may alternatively include updated Tx_lower and does not include the sequence number of the first data packet, which indicates that a data packet whose sequence number is less than updated Tx_lower is no longer transmitted. In other words, the first indication information may indicate that a data packet whose sequence number is less than updated Tx_lower is no longer transmitted.

In another implementation, the first protocol layer in the first communication apparatus may further send third indication information to the first protocol layer in the second communication apparatus. The third indication information indicates that a data packet whose sequence number is less than updated Tx_lower is no longer transmitted. In other words, the first protocol layer in the first communication apparatus sends the first indication information and the third indication information to the first protocol layer in the second communication apparatus. Optionally, the third indication information may include updated Tx_lower, which indicates that a data packet whose sequence number is less than updated Tx_lower is no longer transmitted.

In the foregoing implementation, the first protocol layer in the first communication apparatus updates a lower edge of the transmitting window, and sends, to the first protocol layer in the second communication apparatus, an indication that the data packet whose sequence number is less than updated Tx_lower is no longer transmitted, thereby reducing interaction between different protocol layers of a same communication apparatus, optimizing the user plane protocol stack, reducing an invalid transmission or an invalid retransmission of a data packet, improving resource utilization, and reducing impact on an instant transmission of a subsequent data packet.

The first protocol layer in the second communication apparatus receives the first indication information, and may record the sequence number of the first data packet that is indicated by the first indication information as being no longer transmitted. Further, the first protocol layer in the second communication apparatus may update a second variable of the receiving window based on the first indication information, that is, perform content in S403.

S403: The first protocol layer in the second communication apparatus updates the second variable of the receiving window based on the first indication information.

S403 is an optional step, and is represented by a dashed line in FIG. 4. The first protocol layer in the second communication apparatus may update the second variable of the receiving window based on the first indication information, that is, update Rx_lower. Updating the second variable of the receiving window may also be referred to as updating the receiving window. Rx_high of an updated receiving window may remain unchanged, or may be a sum of updated Rx_lower and window size2. This is not limited. Then, the second communication apparatus receives a data packet from the first communication apparatus based on the updated receiving window. For example, the second communication apparatus may update Rx_lower when the sequence number of the first data packet is greater than or equal to Rx_lower. It should be noted that, when the sequence number of the first data packet is less than Rx_lower, the second communication apparatus may update Rx_lower, or may not update Rx_lower. This is not limited.

For example, updated Rx_lower may be greater than or equal to a sequence number of a data packet that is in the receiving window, that is not completely received, and that is not indicated by the first communication apparatus as being no longer transmitted. For example, updated Rx_lower may be a 1^{st} sequence number in sequence numbers of data packets that are in the receiving window, that are not completely received (or are not all received), and that are not indicated by the first communication apparatus as being no longer transmitted; or updated Rx_lower may be a sequence number (namely, a 2^{nd} sequence number) obtained by adding 1 to a 1^{st} sequence number in sequence numbers of data packets that are in the receiving window, that are not completely received, and that are not indicated by the first communication apparatus as being no longer transmitted. For descriptions of the 1^{st} sequence number, refer to the foregoing content. Details are not described again. In this embodiment, the 1^{st} sequence number may also be replaced with a sequence number of a last data packet that is delivered by the second communication apparatus to an upper layer based on sequence numbers. Correspondingly, the 2^{nd} sequence number may be replaced with a sequence number (namely, a sequence number of a penultimate data packet) obtained by adding 1 to the sequence number of the last data packet that is delivered by the second communication apparatus to the upper layer based on the sequence numbers.

A completely received data packet may be understood as that the entire data packet has been received by the second communication apparatus. A data packet that is not completely received may be understood as that a part or all of the data packet is not received by the second communication apparatus.

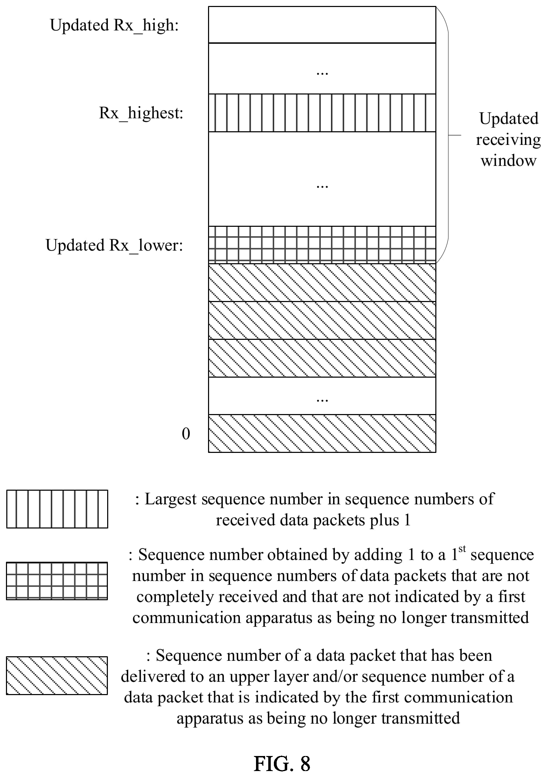

FIG. 8 is an example diagram of an updated receiving window. In FIG. 8, updated Rx_lower is a sequence number obtained by adding 1 to a 1^{st} sequence number in sequence numbers of data packets that are not completely received and that are not indicated by the first communication apparatus as being no longer transmitted. In addition, a data packet whose sequence number is less than updated Rx_lower includes one or more of the following: a data packet that has been delivered to an upper layer (or a data packet that has been completely received), or a data packet that is indicated by the first communication apparatus as being no longer transmitted. In addition, FIG. 8 shows an example in which Rx_highest is a sequence number obtained by adding 1 to a largest sequence number in sequence numbers of data packets received by the second communication apparatus.

For example, it is assumed that the receiving window is {SN 0, SN 1, SN 2, SN 3, SN 4, SN 5, SN 6, SN 7, SN 8}, Rx_lower is 0, and Rx_high is 8. If a data packet with SN 0, a data packet with SN 1, and a data packet with SN 3 have been completely received, remaining data packets are not completely received, the first indication information indicates that the first data packet is no longer transmitted, and the sequence number of the first data packet is 4, sequence numbers of data packets that are in the receiving window, that are not completely received, and that are not indicated by the first communication apparatus as being no longer transmitted include SN 2, SN 5, SN 6, SN 7, and SN 8. Further, updated Rx_lower may be 2, and correspondingly, the updated receiving window may be {SN 2, SN 3, SN 4, SN 5, SN 6, SN 7, SN 8, SN 9, SN 10}, or updated Rx_lower may be greater than 2.

Alternatively, if a data packet with SN 1 and a data packet with SN 3 have been completely received, remaining data packets are not completely received, the first indication information indicates that the first data packet is no longer transmitted, and the sequence number of the first data packet is 4, sequence numbers of data packets that are in the receiving window, that are not completely received, and that are not indicated by the first communication apparatus as being no longer transmitted include SN 0, SN 2, SN 5, SN 6, SN 7, and SN 8. Further, updated Rx_lower may be still 0, and correspondingly, the updated receiving window may be still {SN 0, SN 1, SN 2, SN 3, SN 4, SN 5, SN 6, SN 7, SN 8}, or updated Rx_lower may be greater than 0.

Alternatively, if a data packet with SN 1 and a data packet with SN 3 have been completely received, remaining data packets are not completely received, the first indication information indicates that a data packet whose sequence number is less than updated Tx_lower is no longer transmitted, and updated Tx_lower is 4, sequence numbers of data packets that are in the receiving window, that are not completely received, and that are not indicated by the first communication apparatus as being no longer transmitted include SN 5, SN 6, SN 7, and SN 8. Further, updated Rx_lower may be 5, and correspondingly, the updated receiving window may be {SN 5, SN 6, SN 7, SN 8, SN 9, SN 10, SN 11, SN 12, SN 13}, or updated Rx_lower may be greater than 5.

For another example, it is assumed that the receiving window is {SN 0, SN 1, SN 2, SN 3, SN 4, SN 5, SN 6, SN 7, SN 8}, Rx_lower is 0, and Rx_high is 8. If a data packet with SN 1, a data packet with SN 2, and a data packet with SN 3 have been completely received, remaining data packets are not completely received, the first indication information indicates that the first data packet is no longer transmitted, and the sequence number of the first data packet is 0, sequence numbers of data packets that are in the receiving window, that are not completely received, and that are not indicated by the first communication apparatus as being no longer transmitted include SN 4, SN 5, SN 6, SN 7, and SN 8. Further, updated Rx_lower may be 4, and correspondingly, the updated receiving window may be {SN 4, SN 5, SN 6, SN 7, SN 8, SN 9, SN 10, SN 11, SN 12}, or updated Rx_lower may be greater than 4.

Alternatively, if a data packet with SN 1, a data packet with SN 2, and a data packet with SN 3 have been completely received, remaining data packets are not completely received, the first indication information indicates that a data packet whose sequence number is less than updated Tx_lower is no longer transmitted, and updated Tx_lower is 6, sequence numbers of data packets that are in the receiving window, that are not completely received, and that are not indicated by the first communication apparatus as being no longer transmitted include SN 7 and SN 8. Further, updated Rx_lower may be 7, and correspondingly, the updated receiving window may be {SN 7, SN 8, SN 9, SN 10, SN 11, SN 12, SN 13, SN 14, SN 15}, or updated Rx_lower may be greater than 7.

For still another example, it is assumed that the receiving window is {SN 2, SN 3, SN 4, SN 5, SN 6, SN 7, SN 8}, Rx_lower is 2, and Rx_high is 8. If a data packet with SN 2 and a data packet with SN 3 have been completely received, remaining data packets are not completely received, the first indication information indicates that the first data packet is no longer transmitted, and the sequence number of the first data packet is 1, sequence numbers of data packets that are in the receiving window, that are not completely received, and that are not indicated by the first communication apparatus as being no longer transmitted include SN 4, SN 5, SN 6, SN 7, and SN 8. Further, updated Rx_lower may be 4, and correspondingly, the updated receiving window may be {SN 4, SN 5, SN 6, SN 7, SN 8, SN 9, SN 10}, or updated Rx_lower may be greater than 4.

Alternatively, if no data packet in the receiving window is completely received, the first indication information indicates that the first data packet is no longer transmitted, and the sequence number of the first data packet is 1, sequence numbers of data packets that are in the receiving window, that are not completely received, and that are not indicated by the first communication apparatus as being no longer transmitted include SN 2, SN 3, SN 4, SN 5, SN 6, SN 7, and SN 8. Further, updated Rx_lower may be still 2, and correspondingly, the updated receiving window may be still {SN 2, SN 3, SN 4, SN 5, SN 6, SN 7, SN 8}, or updated Rx_lower may be greater than 2.

Alternatively, if a data packet with SN 2 and a data packet with SN 3 have been completely received, remaining data packets are not completely received, the first indication information indicates that a data packet whose sequence number is less than updated Tx_lower is no longer transmitted, and updated Tx_lower is 6, sequence numbers of data packets that are in the receiving window, that are not completely received, and that are not indicated by the first communication apparatus as being no longer transmitted include SN 7 and SN 8. Further, updated Rx_lower may be 7, and correspondingly, the updated receiving window may be {SN 7, SN 8, SN 9, SN 10, SN 11, SN 12, SN 13}, or updated Rx_lower may be greater than 7.

In a possible implementation, the second communication apparatus may start a reordering timer of the receiving window. For example, the second communication apparatus may start the reordering timer before S403. For example, when there is a hole in the receiving window, or sequence numbers of data packets received in the receiving window are inconsecutive, or a third variable (namely, Rx_highest) is greater than the second variable (namely, Rx_high), the second communication apparatus may start the reordering timer. For example, the first protocol layer in the second communication apparatus may start the reordering timer, but this is not limited to the first protocol layer. When the reordering timer of the receiving window expires, the second communication apparatus may send a second state report to the first communication apparatus. Correspondingly, the first communication apparatus receives the second state report. For example, the first protocol layer in the second communication apparatus may send the second state report to the first protocol layer in the first communication apparatus. Correspondingly, the first protocol layer in the first communication apparatus may receive the second state report. The second state report may indicate a data packet that is unsuccessfully received and/or a data packet that is successfully received in the receiving window. For example, the second state report includes ACK information of a data packet 1, which indicates that the data packet 1 is successfully received. For another example, the second state report includes NACK information of a data packet 2, which indicates that the data packet 2 is unsuccessfully received. In this embodiment, the second state report may include NACK information of the first data packet, which indicates that the first data packet is unsuccessfully received; or may include ACK information of the first data packet, which indicates that the first data packet is successfully received. The second state report may be, for example, an RLC state report. This is not limited.

Optionally, the second communication apparatus may be configured with a prohibit timer, and starts the prohibit timer when sending a state report. For example, the first protocol layer in the second communication apparatus is configured with the prohibit timer, and the first protocol layer in the second communication apparatus starts the prohibit timer when sending a state report. When the prohibit timer runs or does not expire, the second communication apparatus does not transmit a state report to the first communication apparatus; or when the prohibit timer has expired or the prohibit timer does not run, the second communication apparatus may send a state report to the first communication apparatus. For example, when the prohibit timer has expired (or the prohibit timer does not run) and the reordering timer of the receiving window expires, the second communication apparatus may send the second state report to the first communication apparatus. In other words, when the prohibit timer has expired (or the prohibit timer does not run) and the reordering timer of the receiving window expires, the first protocol layer in the second communication apparatus may send the second state report to the first communication apparatus. The prohibit timer may reduce a quantity of times that the receive side sends a state report to the transmit side, and can reduce a resource waste caused by some state reports being useless due to a high frequency of feeding back the state report by the receive side.

In a possible implementation, when the sequence number of the first data packet is greater than or equal to the third variable (that is, greater than Rx_highest), the second communication apparatus may further update the third variable. For example, the first protocol layer in the second communication apparatus updates the third variable. An updated third variable is the sequence number of the first data packet or is the sequence number of the first data packet plus 1.

In S403, the first protocol layer in the second communication apparatus may update the second variable of the receiving window in response to the first indication information. In this way, a retransmission of a data packet that is determined by the first communication apparatus as being no longer transmitted can be avoided, to reduce resource consumption, and reduce impact on a timely transmission of a subsequent data packet.

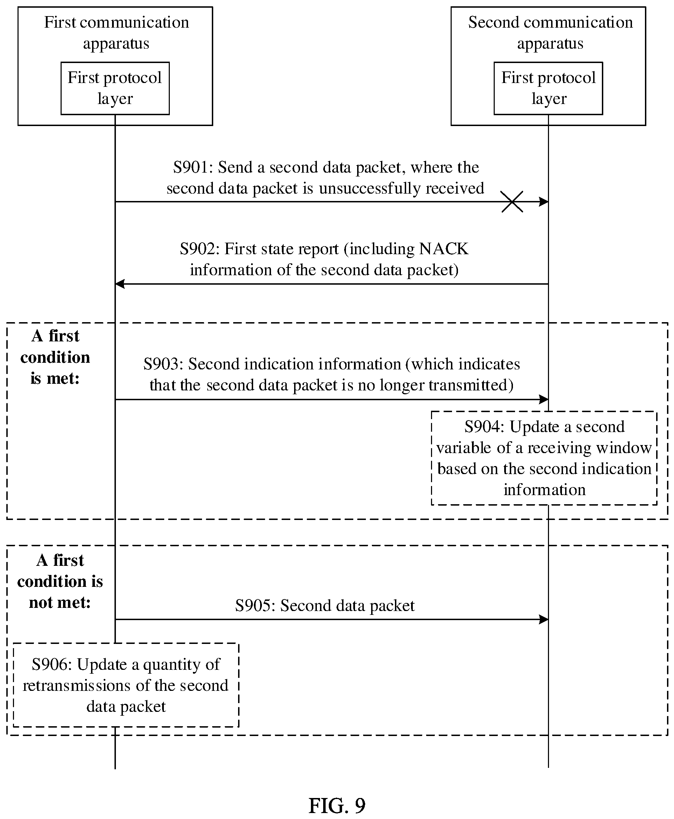

FIG. 9 is an example schematic flowchart of a second communication method according to an embodiment of this application. In this embodiment, in response to a second data packet being unsuccessfully received, a transmit side indicates, to a receive side, a data packet that is no longer transmitted. Specifically, as shown in FIG. 9, the method may include the following content.

S901: A first communication apparatus sends a second data packet to a second communication apparatus.

In this embodiment, the second communication apparatus unsuccessfully receives the second data packet.

For example, a first protocol layer in the first communication apparatus sends the second data packet to the second communication apparatus. Specifically, the first protocol layer in the first communication apparatus may deliver the second data packet to a lower layer, and then the lower layer sends the second data packet to the second communication apparatus. For the first protocol layer, refer to the related descriptions in FIG. 3A and FIG. 3B. Details are not described again.

Optionally, the first protocol layer in the first communication apparatus receives a second data packet from an upper layer, and starts a discard timer corresponding to the second data packet. Optionally, the first protocol layer in the first communication apparatus may allocate a sequence number to the second data packet. Optionally, the sequence number of the second data packet belongs to a transmitting window. In other words, the transmitting window includes the sequence number of the second data packet.

It may be understood that the related content in S901 may be performed by the first protocol layer in the first communication apparatus, or may be performed by one or more other protocol layers of the first communication apparatus, or may be performed by the first protocol layer and one or more other protocol layers of the first communication apparatus. This is not limited.

In a possible implementation, when the sequence number of the second data packet is greater than or equal to a third variable (that is, greater than Rx_highest), the second communication apparatus may further update the third variable. For example, a first protocol layer in the second communication apparatus updates the third variable, and an updated third variable is the sequence number of the second data packet or the sequence number of the second data packet plus 1. For example, the first communication apparatus sends the second data packet. Correspondingly, the second communication apparatus attempts to receive the second data packet. Regardless of whether the second data packet is successfully received or the second data packet is unsuccessfully received, when the sequence number of the second data packet is greater than or equal to the third variable, the second communication apparatus may update the third variable.

In this embodiment, the second communication apparatus unsuccessfully receives the second data packet.

S902: The second communication apparatus sends a first state report to the first communication apparatus.

Correspondingly, the first communication apparatus receives the first state report from the second communication apparatus.

For example, the first protocol layer in the second communication apparatus sends the first state report to the first protocol layer in the first communication apparatus. Correspondingly, the first protocol layer in the first communication apparatus receives the first state report. The first state report may indicate a data packet that is unsuccessfully received and/or a data packet that is successfully received in a receiving window. For example, the first state report includes ACK information of a data packet 1, which indicates that the data packet 1 is successfully received. For another example, the first state report includes NACK information of a data packet 2, which indicates that the data packet 2 is unsuccessfully received. In this embodiment, the first state report includes NACK information of the second data packet, which indicates that the second data packet is unsuccessfully received. The first state report may be an RLC state report. This is not limited.

Optionally, the first protocol layer in the second communication apparatus may start a reordering timer. For example, when there is a hole in the receiving window, or sequence numbers of data packets received in the receiving window are inconsecutive, or the third variable (namely, Rx_highest) is greater than a second variable (namely, Rx_high), the first protocol layer in the second communication apparatus may start the reordering timer. When the reordering timer expires, the first protocol layer in the second communication apparatus may send the first state report to the first protocol layer in the first communication apparatus. For the reordering timer, refer to the related content in S403. Details are not described again.

Optionally, the first protocol layer in the second communication apparatus may start a prohibit timer. When the prohibit timer expires (or the prohibit timer does not run) and the reordering timer expires, the first protocol layer in the second communication apparatus may send the first state report to the first protocol layer in the first communication apparatus. For the prohibit timer, refer to the related content in S403. Details are not described again.

It may be understood that the related content in S902 may be performed by the first protocol layer in the second communication apparatus, or may be performed by one or more other protocol layers of the second communication apparatus, or may be performed by the first protocol layer and one or more other protocol layers of the second communication apparatus. This is not limited.

The first protocol layer in the first communication apparatus may determine, in response to the NACK information of the second data packet, whether a first condition is met. If the first condition is met, content in S903 and S904 is performed; or if it is determined that the first condition is not met, content in S905 and S906 is performed.

The first condition may include one or more of the following: the discard timer corresponding to the second data packet has expired (or the discard timer corresponding to the second data packet does not run); the sequence number of the second data packet is less than a first variable of the transmitting window (that is, less than Tx_lower); or a quantity of retransmissions of the second data packet reaches a maximum quantity of retransmissions. For example, the first condition may be that the discard timer corresponding to the second data packet has expired (or the discard timer corresponding to the second data packet does not run); or the first condition may be that the sequence number of the second data packet is less than the first variable of the transmitting window (that is, less than Tx_lower); or the first condition may be that the quantity of retransmissions of the second data packet reaches the maximum quantity of retransmissions; or the first condition may be that the discard timer corresponding to the second data packet has expired (or the discard timer corresponding to the second data packet does not run) and the sequence number of the second data packet is less than the first variable of the transmitting window (that is, less than Tx_lower); or the first condition may be that the discard timer corresponding to the second data packet has expired (or the discard timer corresponding to the second data packet does not run) and the quantity of retransmissions of the second data packet reaches the maximum quantity of retransmissions; or the first condition may be that the sequence number of the second data packet is less than the first variable of the transmitting window (that is, less than Tx_lower) and the quantity of retransmissions of the second data packet reaches the maximum quantity of retransmissions; or the first condition may be that the discard timer corresponding to the second data packet has expired (or the discard timer corresponding to the second data packet does not run), the sequence number of the second data packet is less than the first variable of the transmitting window (that is, less than Tx_lower), and the quantity of retransmissions of the second data packet reaches the maximum quantity of retransmissions.

S903: The first protocol layer in the first communication apparatus sends second indication information to the first protocol layer in the second communication apparatus when the first condition is met.

Correspondingly, the first protocol layer in the second communication apparatus receives the second indication information from the first protocol layer in the first communication apparatus.

The second indication information may indicate that the second data packet is no longer transmitted, which is alternatively expressed as that the second indication information may indicate that the first communication apparatus no longer sends the second data packet. For a content format of the second indication information, refer to the descriptions of the first indication information. Details are not described again. For example, the first protocol layer in the first communication apparatus responds to the NACK information of the second data packet, and sends the second indication information to the first protocol layer in the second communication apparatus when determining that the first condition is met.

For example, if the second data packet is unsuccessfully received, and the discard timer corresponding to the second data packet has expired (or the discard timer corresponding to the second data packet does not run), the first protocol layer in the first communication apparatus may send the second indication information to the first protocol layer in the second communication apparatus, to indicate that the second data packet is no longer transmitted; or if the second data packet is unsuccessfully received, and the sequence number of the second data packet is less than the first variable of the transmitting window, the first protocol layer in the first communication apparatus may send the second indication information to the first protocol layer in the second communication apparatus, to indicate that the second data packet is no longer transmitted; or if the second data packet is unsuccessfully received, and the quantity of retransmissions of the second data packet reaches the maximum quantity of retransmissions, the first protocol layer in the first communication apparatus may send the second indication information to the first protocol layer in the second communication apparatus, to indicate that the second data packet is no longer transmitted; or if the second data packet is unsuccessfully received, the discard timer corresponding to the second data packet has expired (or the discard timer corresponding to the second data packet does not run), and the sequence number of the second data packet is less than the first variable of the transmitting window, the first protocol layer in the first communication apparatus may send the second indication information to the first protocol layer in the second communication apparatus, to indicate that the second data packet is no longer transmitted; or if the second data packet is unsuccessfully received, the discard timer corresponding to the second data packet has expired (or the discard timer corresponding to the second data packet does not run), and the quantity of retransmissions of the second data packet reaches the maximum quantity of retransmissions, the first protocol layer in the first communication apparatus may send the second indication information to the first protocol layer in the second communication apparatus, to indicate that the second data packet is no longer transmitted; or if the second data packet is unsuccessfully received, the sequence number of the second data packet is less than the first variable of the transmitting window, and the quantity of retransmissions of the second data packet reaches the maximum quantity of retransmissions, the first protocol layer in the first communication apparatus may send the second indication information to the first protocol layer in the second communication apparatus, to indicate that the second data packet is no longer transmitted; or if the second data packet is unsuccessfully received, the discard timer corresponding to the second data packet has expired (or the discard timer corresponding to the second data packet does not run), the sequence number of the second data packet is less than the first variable of the transmitting window, and the quantity of retransmissions of the second data packet reaches the maximum quantity of retransmissions, the first protocol layer in the first communication apparatus may send the second indication information to the first protocol layer in the second communication apparatus, to indicate that the second data packet is no longer transmitted.

In S903, the first protocol layer in the first communication apparatus responds to the NACK information of the second data packet, and sends the second indication information to the first protocol layer in the second communication apparatus when determining that the first condition is met, to indicate that the second data packet is no longer transmitted. Compared with a solution in which a PDCP layer sends indication information to an RLC layer, this embodiment can reduce interaction between protocol layers in a same communication apparatus, optimize a user plane protocol stack, reduce a resource waste caused because the RLC layer has delivered, to a lower layer for a retransmission when the RLC layer receives the indication information, a data packet that is no longer transmitted, and improve resource utilization.

In a possible implementation, when the first condition is met, the first protocol layer in the first communication apparatus may further update (or modify, or the like) the first variable of the transmitting window, that is, update Tx_lower, which is not shown in FIG. 9. Updating the first variable of the transmitting window may also be referred to as updating the transmitting window. Tx_high of an updated transmitting window may remain unchanged, or may be a sum of updated Tx_lower and window size1. This is not limited. The first communication apparatus sends, to the second communication apparatus, only a data packet whose sequence number is in the updated transmitting window.

For example, updated Tx_lower may be a smallest sequence number in sequence numbers of data packets that are in the transmitting window, that are not acknowledged by the second communication apparatus as being successfully received, and whose discard timers do not expire; or updated Tx_lower may be a smallest sequence number in sequence numbers of data packets that are in the transmitting window, that are not acknowledged by the second communication apparatus as being successfully received, and whose quantities of retransmissions do not reach the maximum quantity of retransmissions; or updated Tx_lower may be a smallest sequence number in sequence numbers of data packets that are in the transmitting window, that are not acknowledged by the second communication apparatus as being successfully received, whose discard timers do not expire, and whose quantities of retransmissions do not reach the maximum quantity of retransmissions. For details, refer to the related content in S402. Details are not described again.

In an implementation, the second indication information may further indicate that a data packet whose sequence number is less than updated Tx_lower is no longer transmitted. Optionally, the second indication information may include updated Tx_lower, which indicates that a data packet whose sequence number is less than updated Tx_lower is no longer transmitted. For example, the second indication information includes the sequence number of the second data packet and updated Tx_lower, which indicates that the second data packet is no longer transmitted and a data packet whose sequence number is less than updated Tx_lower is no longer transmitted. For another example, in consideration that the sequence number of the second data packet is less than updated Tx_lower, the second indication information may alternatively include updated Tx_lower and does not include the sequence number of the second data packet, which indicates that a data packet whose sequence number is less than updated Tx_lower is no longer transmitted. In other words, the second indication information may indicate that a data packet whose sequence number is less than updated Tx_lower is no longer transmitted.

In another implementation, the first protocol layer in the first communication apparatus may further send third indication information to the first protocol layer in the second communication apparatus. The third indication information indicates that a data packet whose sequence number is less than updated Tx_lower is no longer transmitted. In other words, the first protocol layer in the first communication apparatus sends the second indication information and the third indication information to the first protocol layer in the second communication apparatus. Optionally, the third indication information may include updated Tx_lower, which indicates that a data packet whose sequence number is less than updated Tx_lower is no longer transmitted.

In the foregoing implementation, the first protocol layer in the first communication apparatus updates a lower edge of the transmitting window, and sends, to the first protocol layer in the second communication apparatus, an indication that the data packet whose sequence number is less than updated Tx_lower is no longer transmitted, thereby reducing interaction between different protocol layers of a same communication apparatus, optimizing the user plane protocol stack, reducing an invalid transmission or an invalid retransmission of a data packet, improving resource utilization, and reducing impact on an instant transmission of a subsequent data packet.

S904: The first protocol layer in the second communication apparatus updates the second variable of the receiving window based on the second indication information.

S904 is an optional step, and is represented by a dashed line in FIG. 9. The first protocol layer in the second communication apparatus may update the second variable of the receiving window based on the first indication information, that is, update Rx_lower. Updating the second variable of the receiving window may also be referred to as updating the receiving window. Rx_high of an updated receiving window may remain unchanged, or may be a sum of updated Rx_lower and window size2. This is not limited. Then, the second communication apparatus receives a data packet from the first communication apparatus based on the updated receiving window.

For example, updated Rx_lower may be greater than or equal to a sequence number of a data packet that is in the receiving window, that is not completely received, and that is not indicated by the first communication apparatus as being no longer transmitted. For example, updated Rx_lower may be a 1^{st} sequence number in sequence numbers of data packets that are in the receiving window, that are not completely received (or are not all received), and that are not indicated by the first communication apparatus as being no longer transmitted; or updated Rx_lower may be a sequence number (namely, a 2^{nd} sequence number) obtained by adding 1 to a 1^{st} sequence number in sequence numbers of data packets that are in the receiving window, that are not completely received, and that are not indicated by the first communication apparatus as being no longer transmitted. For a specific implementation process, refer to the related content in S403. Details are not described again.

In S904, the first protocol layer in the second communication apparatus may update the second variable of the receiving window in response to the second indication information. In this way, a retransmission of a data packet that is determined by the first communication apparatus as being no longer transmitted can be avoided, to reduce resource consumption, and reduce impact on a timely transmission of a subsequent data packet.

S905: The first communication apparatus sends the second data packet to the second communication apparatus when the first condition is not met.

In S905 in FIG. 9, an example in which the second communication apparatus successfully receives the second data packet is used. It should be understood that if the second communication apparatus still unsuccessfully receives the second data packet, content in S902 may be performed.

For example, the first protocol layer in the first communication apparatus sends the second data packet to the second communication apparatus. Specifically, the first protocol layer in the first communication apparatus may deliver the second data packet to the lower layer, and then the lower layer sends the second data packet to the second communication apparatus. For the first protocol layer, refer to the related descriptions in FIG. 3A and FIG. 3B. Details are not described again.

For example, if the discard timer corresponding to the second data packet does not expire, the sequence number of the second data packet is greater than or equal to the first variable of the transmitting window (that is, greater than or equal to Tx_lower), and the quantity of retransmissions of the second data packet does not reach the maximum quantity of retransmissions, the first communication apparatus sends the second data packet to the second communication apparatus; or if the discard timer corresponding to the second data packet does not expire and the sequence number of the second data packet is greater than or equal to the first variable of the transmitting window, the first communication apparatus sends the second data packet to the second communication apparatus; or if the discard timer corresponding to the second data packet does not expire and the quantity of retransmissions of the second data packet does not reach the maximum quantity of retransmissions, the first communication apparatus sends the second data packet to the second communication apparatus; or if the sequence number of the second data packet is greater than or equal to the first variable of the transmitting window and the quantity of retransmissions of the second data packet does not reach the maximum quantity of retransmissions, the first communication apparatus sends the second data packet to the second communication apparatus; or if the discard timer corresponding to the second data packet does not expire, the first communication apparatus sends the second data packet to the second communication apparatus; or if the sequence number of the second data packet is greater than or equal to the first variable of the transmitting window, the first communication apparatus sends the second data packet to the second communication apparatus; or if the quantity of retransmissions of the second data packet does not reach the maximum quantity of retransmissions, the first communication apparatus sends the second data packet to the second communication apparatus.

It may be understood that the related content in S905 may be performed by the first protocol layer in the first communication apparatus, or may be performed by one or more other protocol layers of the first communication apparatus, or may be performed by the first protocol layer and one or more other protocol layers of the first communication apparatus. This is not limited.

In S905, if the first condition is not met, the first communication apparatus may retransmit the second data packet, to ensure data transmission reliability.

In a possible implementation, when the first condition is not met, the first protocol layer in the first communication apparatus may further update (or modify, or the like) the first variable of the transmitting window, that is, update Tx_lower, which is not shown in FIG. 9. Updating the first variable of the transmitting window may also be referred to as updating the transmitting window. Tx_high of an updated transmitting window may remain unchanged, or may be a sum of updated Tx_lower and window size1. This is not limited. The first communication apparatus sends, to the second communication apparatus, only a data packet whose sequence number is in the updated transmitting window. For example, in addition to the NACK information of the second data packet, the first state report may further include ACK information of the data packet with Tx_lower. In this case, the first protocol layer in the first communication apparatus may also update Tx_lower. It may be understood that, when the first state report does not include the ACK information of the data packet with Tx_lower, the first protocol layer in the first communication apparatus may update Tx_lower (Tx_lower before updating and Tx_lower after updating may be the same, or may be different (for example, a quantity of retransmissions of the data packet of Tx_lower is greater than the maximum quantity of retransmissions)); or the first protocol layer in the first communication apparatus may not update Tx_lower. This is not limited.

For example, updated Tx_lower may be a smallest sequence number in sequence numbers of data packets that are in the transmitting window, that are not acknowledged by the second communication apparatus as being successfully received, and whose discard timers do not expire; or updated Tx_lower may be a smallest sequence number in sequence numbers of data packets that are in the transmitting window, that are not acknowledged by the second communication apparatus as being successfully received, and whose quantities of retransmissions do not reach the maximum quantity of retransmissions; or updated Tx_lower may be a smallest sequence number in sequence numbers of data packets that are in the transmitting window, that are not acknowledged by the second communication apparatus as being successfully received, whose discard timers do not expire, and whose quantities of retransmissions do not reach the maximum quantity of retransmissions. For details, refer to the related content in S402. Details are not described again.

In another implementation, after updating Tx_lower, the first protocol layer in the first communication apparatus may further send the third indication information to the first protocol layer in the second communication apparatus (not shown in FIG. 9). The third indication information indicates that a data packet whose sequence number is less than updated Tx_lower is no longer transmitted. For details, refer to the foregoing descriptions. In other words, when the first condition is not met, the first protocol layer in the first communication apparatus may update Tx_lower, and send the third indication information to the first protocol layer in the second communication apparatus.

Optionally, after receiving the third indication information, the first protocol layer in the second communication apparatus may update the second variable of the receiving window based on the third indication information. Updated Rx_lower may be greater than or equal to a sequence number of a data packet that is in the receiving window, that is not completely received, and that is not indicated by the first communication apparatus as being no longer transmitted. For details, refer to the related content in S904. Details are not described again. In other words, when the first condition is not met, the first protocol layer in the first communication apparatus may update Tx_lower, and send the third indication information to the first protocol layer in the second communication apparatus. Correspondingly, the first protocol layer in the second communication apparatus may update Rx_lower based on the third indication information.

It means that, regardless of whether the first condition is met, the first protocol layer in the first communication apparatus may update Tx_lower. In other words, the first protocol layer in the first communication apparatus may update Tx_lower based on a state report of the second communication apparatus. For example, the first protocol layer in the first communication apparatus may update Tx_lower based on the first state report after S902 and before S903 (or after S902 and before (or after) S905). Further, when the first state report includes the NACK information of the second data packet and the first condition is met, the first protocol layer in the first communication apparatus may send the first indication information and/or the third indication information to the first protocol layer in the second communication apparatus; or when the first state report includes the NACK information of the second data packet and the first condition is not met, the first protocol layer in the first communication apparatus may send the third indication information to the first protocol layer in the second communication apparatus.

S906: The first protocol layer in the first communication apparatus updates (or modifies) the quantity of retransmissions of the second data packet.

For example, if the first communication apparatus receives the NACK information of the second data packet for a first time, the first protocol layer in the first communication apparatus may set the quantity of retransmissions (for example, denoted as retx_times) of the second data packet to an initial value (for example, 0 or 1); or if the first communication apparatus receives the NACK information of the second data packet not for the first time, the first communication apparatus updates the quantity of retransmissions of the second data packet, where an updated quantity of retransmissions is the quantity of retransmissions plus 1.

It may be understood that the related content in S906 may be performed by the first protocol layer in the first communication apparatus, or may be performed by one or more other protocol layers of the first communication apparatus, or may be performed by the first protocol layer and one or more other protocol layers of the first communication apparatus. This is not limited.

It should be noted that an execution sequence of S905 and S906 is used as an example, and is not limited thereto. For example, the first communication apparatus may alternatively send the second data packet to the second communication apparatus while updating the quantity of retransmissions of the second data packet. For another example, the first communication apparatus may alternatively update the quantity of retransmissions of the second data packet, and then send the second data packet to the second communication apparatus.

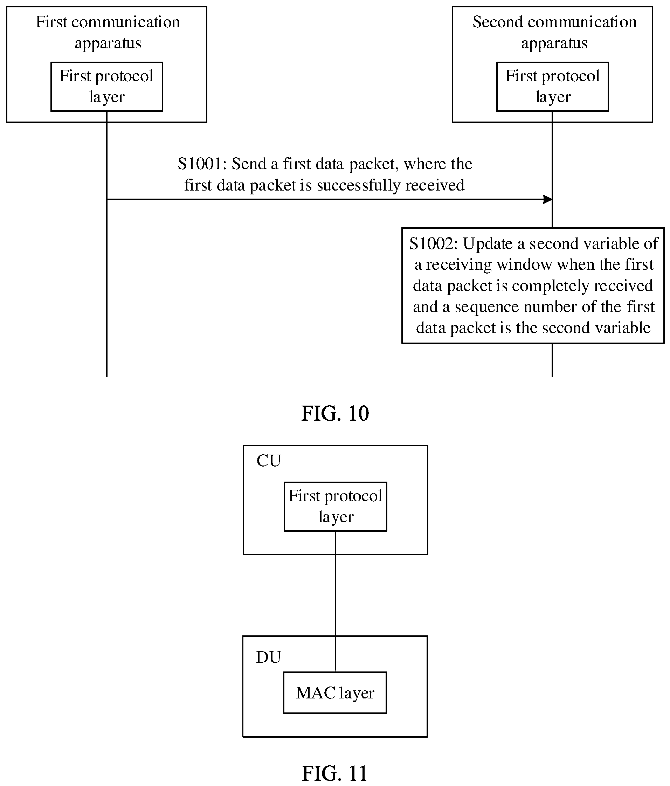

FIG. 10 is an example schematic flowchart of a third communication method according to an embodiment of this application. In this embodiment, a receive side updates a second variable of a receiving window in response to a first data packet being successfully received and a sequence number of the first data packet being the second variable of the receiving window. Specifically, as shown in FIG. 10, the method may include the following content.

S1001: A first communication apparatus sends a first data packet to a second communication apparatus.

In this embodiment, the second communication apparatus successfully receives the first data packet.

For example, a first protocol layer in the first communication apparatus sends the first data packet to the second communication apparatus. Specifically, the first protocol layer in the first communication apparatus may deliver the first data packet to a lower layer, and then the lower layer sends the first data packet to the second communication apparatus. For the first protocol layer, refer to the related descriptions in FIG. 3A and FIG. 3B. Details are not described again.

Optionally, the first protocol layer in the first communication apparatus receives a first data packet from an upper layer, and starts a discard timer corresponding to the first data packet. Optionally, the first protocol layer in the first communication apparatus may allocate a sequence number to the first data packet. Optionally, the sequence number of the first data packet belongs to a transmitting window. In other words, the transmitting window includes the sequence number of the first data packet.

It may be understood that the related content in S1001 may be performed by the first protocol layer in the first communication apparatus, or may be performed by one or more other protocol layers of the first communication apparatus, or may be performed by the first protocol layer and one or more other protocol layers of the first communication apparatus. This is not limited.

The first communication apparatus sends the first data packet. Correspondingly, the second communication apparatus attempts to receive the first data packet. In this embodiment, the second communication apparatus successfully receives the first data packet.

S1002: A first protocol layer in the second communication apparatus updates a second variable of a receiving window when the first data packet is completely received and the sequence number of the first data packet is the second variable.

That the first data packet is successfully received means that the first data packet is completely received, and the first protocol layer in the second communication apparatus may deliver the first data packet to an upper layer for processing. If the sequence number of the first data packet is the second variable (namely, Rx_lower) of the receiving window, the first protocol layer in the second communication apparatus may update the second variable, that is, update Rx_lower. Updating the second variable may also be referred to as updating the receiving window. Rx_high of an updated receiving window may remain unchanged, or may be a sum of updated Rx_lower and window size2. This is not limited. For example, the first protocol layer in the second communication apparatus may update Rx_lower in response to the first data packet being successfully received and the sequence number of the first data packet being Rx_lower. Then, the second communication apparatus receives a data packet from the first communication apparatus based on the updated receiving window.

For example, updated Rx_lower is greater than or equal to a sequence number of a data packet that is in the receiving window, that is not completely received, and that is not indicated by the first communication apparatus as being no longer transmitted. For example, updated Rx_lower may be a 1^{st} sequence number in sequence numbers of data packets that are in the receiving window, that are not completely received (or are not all received), and that are not indicated by the first communication apparatus as being no longer transmitted; or updated Rx_lower may be a sequence number (namely, a 2^{nd} sequence number) obtained by adding 1 to a 1^{st} sequence number in sequence numbers of data packets that are in the receiving window, that are not completely received, and that are not indicated by the first communication apparatus as being no longer transmitted. For a specific implementation, refer to the content in S403. Details are not described again.

In a possible implementation, the first protocol layer in the second communication apparatus may start a reordering timer. For example, when there is a hole in the receiving window, or sequence numbers of data packets received in the receiving window are inconsecutive, or a third variable (namely, Rx_highest) is greater than the second variable (namely, Rx_high), the first protocol layer in the second communication apparatus may start the reordering timer. When the reordering timer expires, the first protocol layer in the second communication apparatus may send a second state report to the first protocol layer in the first communication apparatus. In this embodiment, the second state report includes ACK information of the first data packet, which indicates that the first data packet is successfully received. For the reordering timer, refer to the related content in S403. Details are not described again.

Optionally, the first protocol layer in the second communication apparatus may start a prohibit timer. When the prohibit timer expires (or the prohibit timer does not run) and the reordering timer expires, the first protocol layer in the second communication apparatus may send the second state report to the first protocol layer in the first communication apparatus. For the prohibit timer, refer to the related content in S403. Details are not described again.

In a possible implementation, when the sequence number of the first data packet is equal to the third variable (that is, greater than Rx_highest), that is, Rx_highest is equal to the second variable, the second communication apparatus may further update the third variable. For example, the first protocol layer in the second communication apparatus updates the third variable. An updated third variable is the sequence number of the first data packet or is the sequence number of the first data packet plus 1. In other words, in this embodiment, the updated third variable is still the second variable, or is the second variable plus 1.

In a possible implementation, the first protocol layer in the first communication apparatus may update a first variable of the transmitting window, that is, update Tx_lower. For example, the first communication apparatus may update Tx_lower in response to expiry of the discard timer corresponding to the first data packet. For details, refer to the related content in the embodiment shown in FIG. 4. Details are not described again. For another example, the first communication apparatus may alternatively update Tx_lower in response to the second state report of the second communication apparatus. For details, refer to the related content in the embodiment shown in FIG. 9. Details are not described again. In addition, for updated Tx_lower, refer to the related descriptions in the embodiment shown in FIG. 4 or FIG. 9. Details are not described again.

In S1002, when a data packet is completely received, and a sequence number of the data packet is the lower edge of the receiving window, the first protocol layer in the second communication apparatus may update the lower edge of the receiving window, and push the lower edge of the receiving window to slide, to reduce impact on timely receiving of a subsequent data packet.

It should be noted that the foregoing first communication method, the foregoing second communication method, and the foregoing third communication method may be used independently, or may be used in combination. This is not limited.

It may be understood that, a first communication apparatus may update Tx_lower in response to expiry of a discard timer corresponding to a data packet, or may update Tx_lower in response to a state report of a second communication apparatus, or may directly update Tx_lower. For example, the first communication apparatus may periodically or aperiodically update Tx_lower. A trigger condition for updating Tx_lower on a transmit side is not limited in embodiments of this application.

It may be understood that the second communication apparatus may update Rx_lower in response to first indication information (or second indication information or third indication information) of the first communication apparatus; or may update Rx_lower in response to a data packet with Rx_lower being completely received; or may directly update Rx_lower. For example, the second communication apparatus may periodically or aperiodically update Rx_lower. A trigger condition for updating Rx_lower on a receive side is not limited in embodiments of this application.

The communication method provided in embodiments of this application may be applied to a scenario in which terminal devices communicate, or may be applied to a scenario in which a terminal device communicates with a network device. When the communication method provided in embodiments of this application is applied to a scenario in which the terminal device communicates with the network device, the network device may not use a CU-DU split architecture, or may use a CU-DU split architecture.

In a possible implementation, if the network device uses the CU-DU split architecture, a first protocol layer may be deployed in a CU, as shown in FIG. 11. The first protocol layer is deployed in the CU, and the first protocol layer may communicate with a DU. A lower layer of the first protocol layer may be denoted as a second protocol layer, and the second protocol layer may be deployed in the DU. The second protocol layer may be, for example, a MAC layer. This is not limited. The following provides descriptions by using an example in which the second protocol layer is a MAC layer. Correspondingly, the MAC layer is deployed in the DU. The MAC layer may also be referred to as a MAC entity, a MAC layer entity, or the like. This is not limited. In addition, the DU may be connected to an RU, which is not shown in FIG. 11. For descriptions of the CU, the DU, and the RU, refer to the foregoing content. Details are not described herein again.

It may be understood that, in the following, content executed by the first protocol layer may be implemented by the CU, and content executed by the MAC layer may be implemented by the DU.

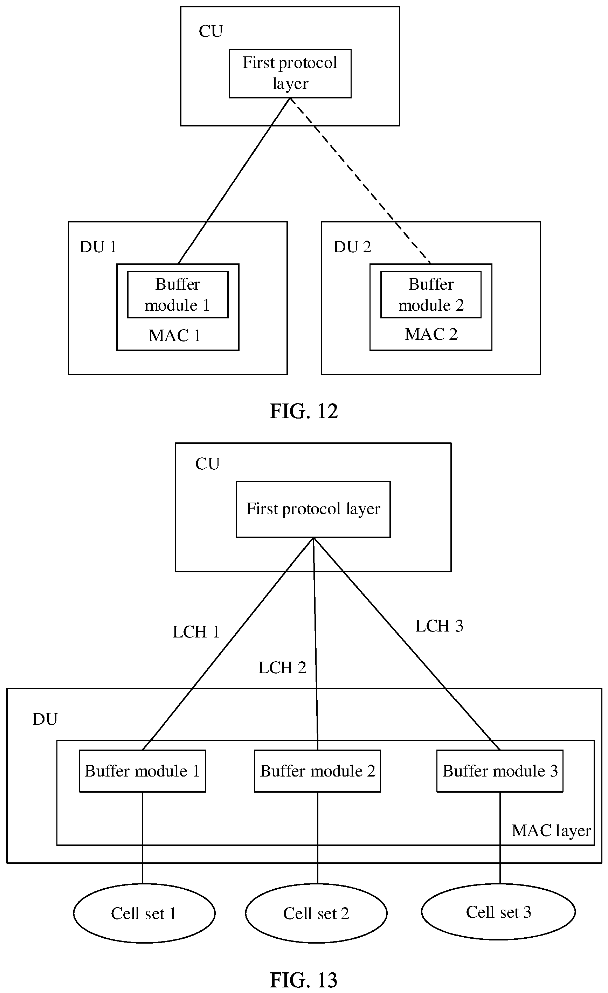

In a possible implementation, one CU may be connected to at least one DU. FIG. 12 shows an example in which one CU is connected to two DUs (for example, denoted as a DU 1 and a DU 2). As shown in FIG. 12, a MAC layer deployed in the DU 1 is denoted as MAC 1, and a MAC layer deployed in the DU 2 is denoted as MAC 2. The MAC layer may include a buffer module (or referred to as a buffer area, a buffer, or the like), configured to buffer data and perform functions such as data segmentation, for example, configured to buffer a PDU from a first protocol layer. A buffer module in MAC 1 is denoted as a buffer module 1, and a buffer module in MAC 2 is denoted as a buffer module 2. For example, the first protocol layer processes an SDU received from an upper layer, to generate at least one PDU, transmits the at least one PDU to the MAC layer before receiving a transmission request indicated by the MAC layer, and buffers the at least one PDU in a buffer module of the MAC layer, for example, the buffer module 1 or the buffer module 2. Then, when the MAC layer fetches a data packet to assemble a transport block (transport block, TB), the MAC layer may preferentially read a PDU with a high priority from the buffer module, perform a segmentation operation on the read PDU based on a requirement, and modify a format of a packet header of the first protocol layer. For example, the MAC layer may determine a priority of the PDU based on priority information of the PDU or type information of the PDU (for example, a priority of a PDU for control (control) is higher than a priority of a PDU for a data retransmission, and the priority of the PDU for the data retransmission is higher than a priority of a PDU for a data transmission). The priority information of the PDU or the type information of the PDU may be indicated in a packet when the CU transmits the PDU to the DU. This is not limited. It should be understood that, after fetching the PDU from the buffer module to assemble (or form) the TB, the MAC layer may delete the PDU from the buffer module, and release a buffer in a timely manner.

Sending a first data packet is used as an example. The first communication apparatus is a network device. That a first protocol layer in the first communication apparatus sends the first data packet to the second communication apparatus may be specifically as follows: The first protocol layer in the first communication apparatus sends at least one first PDU to a MAC layer. After receiving the at least one first PDU, the MAC layer buffers the at least one first PDU, and after determining a transmission resource of the at least one first PDU, assembles the at least one first PDU into a TB to obtain the first data packet, and sends the first data packet to the second communication apparatus.

In this implementation, the first protocol layer buffers the PDU in the buffer module of the MAC layer in advance. In this way, after determining the transmission resource, the MAC layer may directly fetch the PDU from the buffer module to form the TB. Compared with a solution in which the MAC layer sends a transmission request to the first protocol layer after determining the transmission resource, and the first protocol layer sends the PDU to the MAC layer in response to the transmission request, this implementation can reduce a data processing delay in the CU-DU split architecture, reduce occupation of an air interface transmission time of a data packet by an interaction delay between protocol layers, and help improve QoS of a low-latency service.

In a possible implementation, a first protocol layer is deployed in a CU, a MAC layer is deployed in a DU, N logical channels (logical channel, LCH) are established between the first protocol layer and the MAC layer, the N LCHs are associated with N buffer modules of the MAC layer, and the N LCHs are associated with N cell sets, as shown in FIG. 13. For example, one LCH is associated with one buffer module of the MAC layer, and one buffer module of the MAC layer is associated with one LCH. For example, one LCH is associated with one cell set, and one cell set is associated with one LCH. One cell set may include one or more cells. This is not limited. N is an integer greater than 1. FIG. 13 shows an example in which N is 3. Three buffer modules are denoted as a buffer module 1, a buffer module 2, and a buffer module 3, three LCHs are denoted as an LCH 1, an LCH 2, and an LCH 3, and three cell sets are denoted as a cell set 1, a cell set 2, and a cell set 3. The LCH 1 is associated with the buffer module 1 and the cell set 1, the LCH 2 is associated with the buffer module 2 and the cell set 2, and the LCH 3 is associated with the buffer module 3 and the cell set 3.

For example, the first protocol layer processes an SDU received from an upper layer, to generate at least one PDU (a PDU 1 is used as an example for description), makes N duplicates of the PDU 1 before receiving a transmission request indicated by the MAC layer, to obtain N PDUs 1, and delivers the PDUs 1 to the buffer modules associated with the MAC layer through the N LCHs for buffering. For example, the PDU 1 is delivered to the buffer module 1 of the MAC layer through the LCH 1, the PDU 1 is delivered to the buffer module 2 of the MAC layer through the LCH 2 for buffering, and the PDU 1 is delivered to the buffer module 3 of the MAC layer through the LCH 2 for buffering. Then, if the MAC layer receives a scheduling resource on a specific cell set, the MAC layer fetches a data packet from a buffer module associated with the cell set to assemble a TB. For example, the MAC layer fetches a PDU from the buffer module 1 to assemble a TB, and then sends the TB to the cell set 1. For example, the MAC layer fetches a PDU from the buffer module 2 to assemble a TB, and then sends the TB to the cell set 2. For example, the MAC layer fetches a PDU from the buffer module 3 to assemble a TB, and then sends the TB to the cell set 3.

For example, a payload of a first data packet and a payload of a third data packet are the same (that is, a PDU for generating the first data packet and a PDU for generating the third data packet are the same). A first communication apparatus is a network device. A first protocol layer in the first communication apparatus may further send the third data packet to a third communication apparatus. A cell set in which the third communication apparatus is located is different from a cell set in which a second communication apparatus is located. That the first protocol layer in the first communication apparatus sends the first data packet to the second communication apparatus and sends the third data packet to the third communication apparatus may be specifically as follows: The first protocol layer in the first communication apparatus duplicates a first PDU to obtain two first PDUs, and sends the two first PDUs to a MAC layer. After receiving the two first PDUs, the MAC layer buffers one of the two first PDUs in a first buffer area, and buffers the other first PDU in a second buffer area. Further, after determining a transmission resource of the first PDU, the MAC layer fetches the first PDU from the first buffer area to assemble a TB and obtain the first data packet, and sends the first data packet to the second communication apparatus; and fetches the first PDU from the second buffer area to assemble a TB and obtain the third data packet, and sends the third data packet to the third communication apparatus.

The third communication apparatus may be a terminal device, or may be a component (for example, a chip, a chip system, or a circuit) in the terminal device. This is not limited. For the terminal device, refer to the related descriptions in FIG. 2. Details are not described again.

In this implementation, enabling the first protocol layer to have a data duplication function helps meet a QoS requirement of an ultra-low-latency and ultra-high-reliability service. In addition, the first protocol layer may buffer the PDU in the buffer module of the MAC layer in advance. This can reduce a data processing delay in the CU-DU split architecture, reduce occupation of an air interface transmission time of a data packet by an interaction delay between protocol layers, and help improve QoS of a low-latency service.

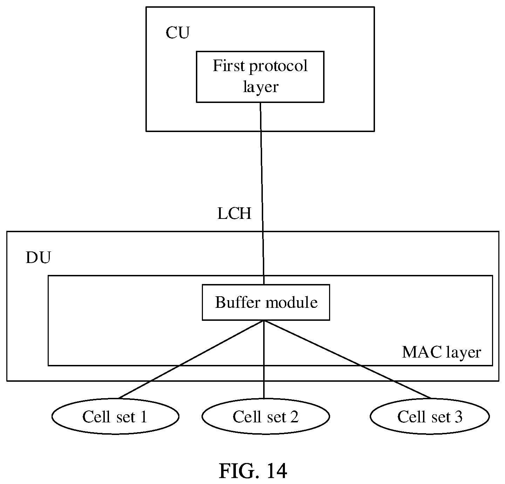

In a possible implementation, a first protocol layer is deployed in a CU, a MAC layer is deployed in a DU, one LCH is established between the first protocol layer and the MAC layer, the MAC layer may maintain one buffer module for one first protocol layer, and one buffer module may be associated with N cell sets to transmit N pieces of same data, as shown in FIG. 14. One cell set may include one or more cells. This is not limited. N is an integer greater than 1. FIG. 14 shows an example in which N is 3.

In this implementation, each data packet (or a PDU) in the buffer module corresponds to N state variables, and the N state variables may indicate transmission statuses of the data packet in the N cell sets, for example, indicate that the data packet has not been transmitted, or indicate that the data packet has been transmitted. One state variable corresponds to one cell set, and one cell set corresponds to one state variable. In an implementation, a value of a state variable corresponding to a data packet includes a third value and a fourth value. When the value of the state variable is the third value, the state variable indicates that a data packet corresponding to the state variable is once transmitted in a cell set corresponding to the state variable; or when the value of the state variable is the fourth value, the state variable indicates that a data packet corresponding to the state variable has not been transmitted in a cell set corresponding to the state variable. Optionally, one state variable may occupy 1 bit, the third value may be 1, and the fourth value may be 0; or the third value may be 0, and the fourth value may be 1. For example, each state variable of the data packet may be initialized to the fourth value. When the MAC layer sends the data packet to a cell set, a maintained state variable that is of the data packet and that corresponds to the cell set may be updated (or modified) to the third value. The first protocol layer sends the data packet to the MAC layer. For a process in which the MAC layer buffers the data packet and a subsequent TB assembly process, refer to the foregoing content. Details are not described again.

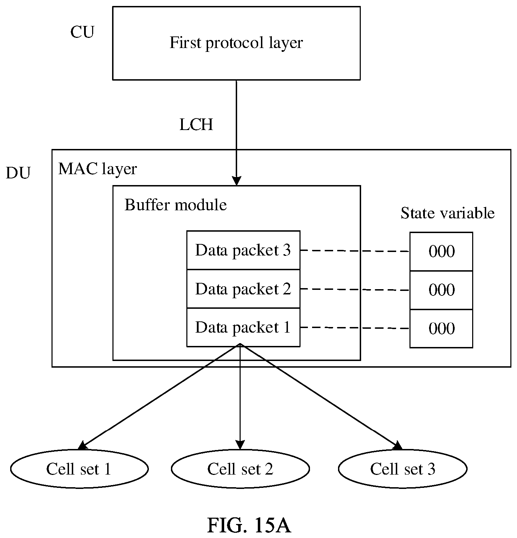

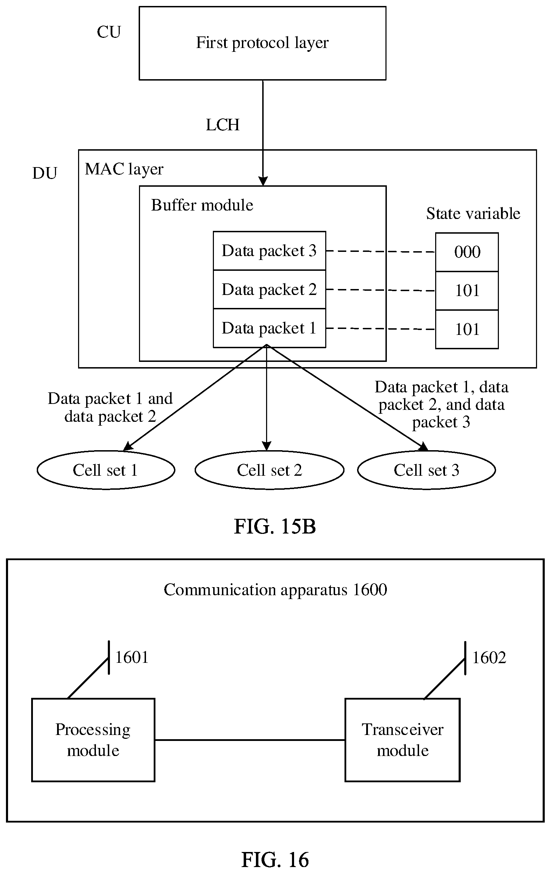

For example, it is assumed that the third value is 1, the fourth value is 0, and three state variables are maintained for (or correspond to) each data packet in a data packet 1, a data packet 2, and a data packet 3. A first state variable corresponds to a cell set 1, a second state variable corresponds to a cell set 2, and a third state variable corresponds to a cell set 3. State variables corresponding to the three data packets are all initialized to 0, that is, three state variables of each data packet are all initialized to 0, as shown in FIG. 15A. If the MAC layer sends the data packet 1 and the data packet 2 to the cell set 1, sends the data packet 1, the data packet 2, and the data packet 3 to the cell set 3, and has not sent a data packet to the cell set 2, values of three state variables corresponding to the data packet 1 are 101, values of three state variables corresponding to the data packet 2 are 101, and values of three state variables corresponding to the data packet 3 are 001, as shown in FIG. 15B. It may be understood that the state variable and the data packet may be stored in a same buffer module, or may be stored in different buffer modules. This is not limited.

Optionally, the MAC layer may segment the data packet, and may further maintain a status of a segment is in each cell set, that is, maintain a state variable at a granularity of a segment. For details, refer to the foregoing implementation process of maintaining the state variable at a granularity of a data packet. Details are not described again.

Optionally, when the data packet is transmitted in all corresponding cell sets, the data packet is deleted from the buffer module at the MAC layer, to release buffer space in a timely manner.

That the first communication apparatus sends the first data packet to the second communication apparatus and the third communication apparatus is used as an example. The first communication apparatus is a network device, and the first protocol layer in the first communication apparatus may further send the first data packet to the third communication apparatus. A cell set in which the third communication apparatus is located is different from a cell set in which the second communication apparatus is located. The first protocol layer in the first communication apparatus sends the first data packet to the MAC layer. The MAC layer buffers the first data packet, and maintains two state variables corresponding to the first data packet. One of the two state variables indicates whether the first communication apparatus sends the first data packet to the second communication apparatus, and the remaining state variable indicates whether the first communication apparatus sends the first data packet to the third communication apparatus.

In this implementation, the MAC layer is enabled to maintain a state variable corresponding to a data packet, and the state variable is associated with a plurality of cell sets, to determine a transmission status of the data packet in the plurality of cell sets, and help meet a QoS requirement of an ultra-low-latency and ultra-high-reliability service. In addition, the first protocol layer may buffer the PDU in the buffer module of the MAC layer in advance. This can reduce a data processing delay in the CU-DU split architecture, reduce occupation of an air interface transmission time of a data packet by an interaction delay between protocol layers, and help improve QoS of a low-latency service.

In embodiments provided in this application, the method provided in embodiments of this application is described from respective perspectives of interaction between a first communication apparatus and a second communication apparatus. Steps performed by a communication apparatus (for example, the first communication apparatus or the second communication apparatus) may be implemented by different functional entities that form a terminal device, or steps performed by a communication apparatus (for example, the first communication apparatus or the second communication apparatus) may be implemented by different functional entities that form a network device. The communication apparatus (for example, the first communication apparatus or the second communication apparatus) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

FIG. 16 is an example diagram of a structure of a communication apparatus 1600. The communication apparatus 1600 may implement functions or steps implemented by the first communication apparatus or the second communication apparatus in the foregoing method embodiments.

For example, the communication apparatus 1600 may be a network device or a component in the network device, or a terminal device or a component in the terminal device.

In an implementation, the communication apparatus 1600 may include a processing module 1601 and a transceiver module 1602. The processing module 1601 may be configured to perform data processing, for example, perform the foregoing method embodiments. The processing module 1601 may also be referred to as a processing unit, or the like. The transceiver module 1602 may be configured to implement a corresponding communication function, for example, receive or send related data, information, or a message. The transceiver module 1602 may also be referred to as a communication interface, a communication module, a transceiver unit, or the like.

It should be noted that, the communication apparatus 1600 may include the processing module 1601, but does not include the transceiver module 1602. Alternatively, the communication apparatus 1600 may include the transceiver module 1602, but does not include the processing module 1601. This may specifically depend on whether the foregoing solutions performed by the communication apparatus 1600 include a processing action and a receiving/sending action.

Optionally, the communication apparatus 1600 may further include a storage module, not shown in FIG. 16. The storage module may be configured to store instructions and/or data, and the processing module 1601 may read the instructions and/or the data in the storage module, to enable the communication apparatus 1600 to implement the foregoing method embodiments.

Optionally, the transceiver module 1602 may include a sending module and a receiving module. The sending module is configured to perform the sending operation in the foregoing method embodiment. The receiving module is configured to perform the receiving operation in the foregoing method embodiment.

It should be noted that the communication apparatus 1600 may include the sending module but not include the receiving module. Alternatively, the communication apparatus 1600 may include the receiving module but not include the sending module. This may specifically depend on whether the foregoing solutions performed by the communication apparatus 1600 include a sending action and a receiving action.

Optionally, the communication apparatus 1600 is a chip system, the transceiver unit may be an input/output interface of a chip (for example, a baseband chip), and the processing unit may be a processor of the chip system.

In a first implementation, the communication apparatus 1600 may be a first communication apparatus, and is configured to perform the steps performed by the first communication apparatus in the foregoing method embodiments.

In an example, the communication apparatus 1600 may perform the following content: The transceiver module 1602 may be configured to send, by a first protocol layer in the first communication apparatus, first indication information to a first protocol layer in a second communication apparatus when a discard timer corresponding to a first data packet expires. The first indication information indicates that the first data packet is no longer transmitted.

Optionally, the processing module 1601 may be configured to update a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

Optionally, the transceiver module 1602 may be further configured to send third indication information to the first protocol layer in the second communication apparatus. The third indication information indicates that a data packet whose sequence number is less than the updated first variable is no longer transmitted.

Optionally, the transceiver module 1602 may be further configured to receive a second state report of the second communication apparatus. The second state report includes NACK information of the first data packet or includes ACK information of the first data packet.

In another example, the communication apparatus 1600 may perform the following content: The transceiver module 1602 may be configured to receive a first state report from a second communication apparatus, where the first state report includes NACK information of a second data packet; and send second indication information to the first protocol layer in the second communication apparatus when a first condition is met, where the second indication information indicates that the second data packet is no longer transmitted; or send the second data packet to the second communication apparatus when a first condition is not met. The first condition is one or more of the following: a discard timer corresponding to the second data packet has expired or a discard timer corresponding to the second data packet does not run; a sequence number of the second data packet is less than a first variable of a transmitting window; or a quantity of retransmissions of the second data packet reaches a maximum quantity of retransmissions. The first variable is a lower edge of the transmitting window.

Optionally, the processing module 1601 may be configured to update a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

Optionally, the transceiver module 1602 may be further configured to send third indication information to the first protocol layer in the second communication apparatus. The third indication information indicates that a data packet whose sequence number is less than the updated first variable is no longer transmitted.

Optionally, the processing module 1601 may be further configured to update the quantity of retransmissions of the second data packet when the first condition is not met.

In a second implementation, the communication apparatus 1600 may be a second communication apparatus, and is configured to perform the steps performed by the second communication apparatus in the foregoing method embodiments.

In an example, the communication apparatus 1600 may perform the following content: The transceiver module 1602 may be configured to receive first indication information from a first protocol layer in a first communication apparatus. The first indication information indicates that the first data packet is no longer transmitted. The processing module 1601 may be configured to update a second variable of a receiving window based on the first indication information. An updated second variable is greater than or equal to a sequence number of a data packet that is in the receiving window, that is not completely received, and that is not indicated by the first communication apparatus as being no longer transmitted, and the second variable is a lower edge of the receiving window.

Optionally, the transceiver module 1602 may be further configured to send a second state report to the first communication apparatus when a reordering timer of the receiving window expires. The second state report includes NACK information of the first data packet or includes ACK information of the first data packet.

Optionally, sending the second state report to the first communication apparatus when the reordering timer of the receiving window expires may be specifically as follows: The transceiver module 1602 may be configured to send the second state report to the first communication apparatus when a prohibit timer has expired or a prohibit timer does not run, and the reordering timer of the receiving window expires.

Optionally, the processing module 1601 may be further configured to update a third variable when a sequence number of the first data packet is greater than or equal to the third variable. An updated third variable is the sequence number of the first data packet or is the sequence number of the first data packet plus 1, and the third variable is associated with a maximum value of a sequence number of a data packet received on a receive side.

In another example, the communication apparatus 1600 may perform the following content: The transceiver module 1602 may be configured to receive a first data packet from a first communication apparatus. The processing module 1601 may be configured to update a second variable of a receiving window when the first data packet is completely received and a sequence number of the first data packet is the second variable. An updated second variable is greater than or equal to a sequence number of a data packet that is in the receiving window, that is not completely received, and that is not indicated by the first communication apparatus as being no longer transmitted, and the second variable is a lower edge of the receiving window.

Optionally, the processing module 1601 may be further configured to update a third variable when the sequence number of the first data packet is equal to the third variable. An updated third variable is the sequence number of the first data packet or is the sequence number of the first data packet plus 1, and the third variable is associated with a maximum value of a sequence number of a data packet received on a receive side.

It should be understood that, more detailed descriptions of corresponding processes performed by the modules may be directly obtained by directly referring to related descriptions in the method embodiments. For brevity, details are not described herein again.

The processing module 1601 in the foregoing embodiment may be implemented by at least one processor or processor-related circuit. The transceiver module 1602 may be implemented by a transceiver or a transceiver-related circuit. The storage module may be implemented by at least one memory.

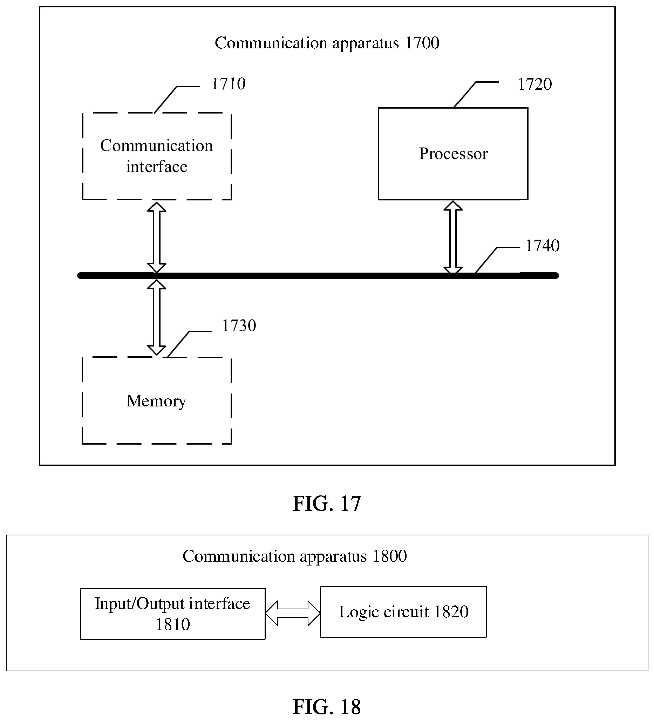

FIG. 17 is a diagram of a structure of a communication apparatus 1700 according to an embodiment of this application. The communication apparatus 1700 may include a processor 1720, configured to implement or support the communication apparatus 1700 in implementing functions of the first communication apparatus or the second communication apparatus in any method embodiment of this application. For details, refer to the detailed descriptions in the foregoing method embodiments. Details are not described herein again. For example, the processor 1720 is configured to: read program instructions through a communication interface, and execute the program instructions, so that the communication apparatus 1700 implements a corresponding method. The processor 1720 may include one or more processors. This is not limited.

It should be noted that the foregoing functional module may be implemented by hardware, or may be implemented by a combination of the hardware and software. This is not limited. When the communication apparatus 1700 includes only the processor 1720, the communication apparatus 1700 may be a chip, or may be a chip system.

For example, the communication apparatus 1700 may be a chip system. The chip system may include a chip, or may include a chip and another discrete component. This is not limited.

Optionally, the communication apparatus 1700 may further include a memory 1730, configured to store program instructions and/or data. The memory 1730 is coupled to the processor 1720. Coupling may be understood as an indirect coupling or a communication connection between apparatuses, units, or modules, may be in an electrical, mechanical, or another form, and is for information exchange between the apparatuses, the units, or the modules. The processor 1720 may operate in collaboration with the memory 1730. The processor 1720 and the memory 1730 may be integrated together, or may be disposed separately.

Further, the processor 1720 is configured to execute the program instructions stored in the memory 1730, so that the communication apparatus 1700 implements a corresponding method.

The one or more memories in the memory 1730 may be included in the processor, or the memory 1730 may exist independently, for example, an off-chip memory, and is connected to the processor 1720 through a communication bus (represented by a bold line 1740 in FIG. 17). The memory 1730 may be alternatively integrated with the processor 1720.

Optionally, the communication apparatus 1700 further includes a communication interface 1710 (represented by a dashed line in FIG. 17), configured to communicate with another device by using a transmission medium, so that an apparatus in the communication apparatus 1700 may communicate with the another device. For example, when the communication apparatus is a first communication apparatus, the another device may be a second communication apparatus, or the like. The processor 1720 may receive and send data through the communication interface 1710. For example, the processor 1720 may be configured to control the communication interface 1710 to receive and/or send a signal.

The communication interface 1710 may be specifically a transceiver. In a hardware implementation, the transceiver may be configured to implement a function of the transceiver module 1602, and the transceiver is integrated into the communication apparatus 1700 to constitute the communication interface 1710.

It should be noted that, the communication interface 1710 may have a sending function and a receiving function, and may implement signal receiving and sending; or may have a sending function, but does not have a receiving function, and is configured to implement signal sending; or may have a receiving function, but does not have a sending function, and is configured to implement signal receiving.

It should be noted that a specific connection medium between the communication interface 1710, the processor 1720, and the memory 1730 is not limited in this embodiment of this application. In FIG. 17, the memory 1730, the processor 1720, and the communication interface 1710 are connected through the communication bus 1740. A manner of connection between other components is merely an example for description, and is not limited thereto. The communication bus 1740 may be classified into an address bus, a data bus, a control bus, or the like. For ease of representation, only one thick line is used to represent the bus in FIG. 17, but this does not mean that there is only one communication bus or only one type of communication bus.

In this embodiment of this application, the processor 1720 may be a general-purpose processor, a digital signal processor, an application-specific integrated circuit, a field programmable gate array or another programmable logic device, a discrete gate or transistor logic device, or a discrete hardware component. The general-purpose processor may be a microprocessor, any conventional processor, or the like. The method disclosed with reference to embodiments of this application may be performed and completed by hardware in the processor, or may be performed and completed by a combination of hardware and software in the processor.

In embodiments of this application, the memory 1730 may be a non-volatile memory, such as a hard disk drive (hard disk drive, HDD) or a solid-state drive (solid-state drive, SSD), or may be a volatile memory (volatile memory), such as a random access memory (random access memory, RAM). Alternatively, the memory may be any other medium that is used to carry or store program code in a form of instructions or a data structure and that can be accessed by a computer, or may be a circuit, or any other apparatus that can implement a storage function, and is configured to store the program instructions and/or the data.

Specifically, the communication apparatus 1700 may be a network device or a component (for example, a DU) in the network device, or a terminal device or a component in the terminal device. For example, as a transmit side of a second terminal device, the communication apparatus 1700 may be a first network device or a component in the first network device, or a first terminal device or a component in the first terminal device. For another example, as a receive side of a second network device, the communication apparatus 1700 may be a first terminal device or a component in the first terminal device. For another example, as a receive side of a first terminal device, the communication apparatus 1700 may be a second network device or a component in the second network device, or a second terminal device or a component in the second terminal device. For another example, as a receive side of a first network device, the communication apparatus 1700 may be a second terminal device or a component in the second terminal device.

In a first possible implementation, the communication apparatus 1700 may be a CU in the first network device, and is configured to implement related methods corresponding to the first communication apparatus in the foregoing embodiments. For specific functions, refer to the descriptions in the foregoing embodiments.

For example, the related method corresponding to the first communication apparatus in the foregoing embodiments includes: sending first indication information when a discard timer corresponding to a first data packet expires. The first indication information indicates that the first data packet is no longer transmitted. For example, the CU sends the first indication information to a DU in the first network device, the DU sends the first indication information to an RU in the first network device, and then the RU sends the first indication information to a second communication apparatus.

Optionally, the related method corresponding to the first communication apparatus in the foregoing embodiments includes: updating a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

Optionally, the related method corresponding to the first communication apparatus in the foregoing embodiments includes: sending third indication information. The third indication information indicates that a data packet whose sequence number is less than the updated first variable is no longer transmitted. For example, the CU sends the third indication information to the DU in the first network device, the DU sends the third indication information to the RU in the first network device, and then the RU sends the third indication information to the second communication apparatus.

In a second possible implementation, the communication apparatus 1700 may be a CU in the first network device, and is configured to implement related methods corresponding to the first communication apparatus in the foregoing embodiments. For specific functions, refer to the descriptions in the foregoing embodiments.

For example, the related method corresponding to the first communication apparatus in the foregoing embodiments includes: receiving a first state report, where the first state report includes NACK information of a second data packet; and sending second indication information when a first condition is met, where the second indication information indicates that the second data packet is no longer transmitted; or sending the second data packet when a first condition is not met. The first condition is one or more of the following: a discard timer corresponding to the second data packet has expired or a discard timer corresponding to the second data packet does not run; a sequence number of the second data packet is less than a first variable of a transmitting window; or a quantity of retransmissions of the second data packet reaches a maximum quantity of retransmissions. The first variable is a lower edge of the transmitting window. For example, an RU in the first network device receives the first state report from the second communication apparatus, and sends the first state report to a DU in the first network device, and the CU may receive the first state report from the DU. For example, the CU sends the second indication information (or the second data packet) to the DU in the first network device, the DU sends the second indication information (or the second data packet) to the RU in the first network device, and then the RU sends the second indication information (or the second data packet) to the second communication apparatus.

Optionally, the related method corresponding to the first communication apparatus in the foregoing embodiments includes: updating a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

Optionally, the related method corresponding to the first communication apparatus in the foregoing embodiments includes: sending third indication information. The third indication information indicates that a data packet whose sequence number is less than the updated first variable is no longer transmitted. For example, the CU sends the third indication information to the DU in the first network device, the DU sends the third indication information to the RU in the first network device, and then the RU sends the third indication information to the second communication apparatus.

Optionally, the related method corresponding to the first communication apparatus in the foregoing embodiments includes: updating the quantity of retransmissions of the second data packet when the first condition is not met.

In a third possible implementation, the communication apparatus 1700 may be a CU in the second network device, and is configured to implement related methods corresponding to the second communication apparatus in the foregoing embodiments. For specific functions, refer to the descriptions in the foregoing embodiments.

For example, the related method corresponding to the second communication apparatus in the foregoing embodiments includes: receiving first indication information, where the first indication information indicates that a first data packet is no longer transmitted; and updating a second variable of a receiving window based on the first indication information, where an updated second variable is greater than or equal to a sequence number of a data packet that is in the receiving window, that is not completely received, and that is not indicated by the first communication apparatus as being no longer transmitted, and the second variable is a lower edge of the receiving window. For example, an RU in the second network device receives the first indication information from the first communication apparatus, and sends the first indication information to a DU in the second network device. The CU may receive the first indication information from the DU.

Optionally, the related method corresponding to the second communication apparatus in the foregoing embodiments includes: sending a second state report when a reordering timer of the receiving window expires. The second state report includes NACK information of the first data packet or includes ACK information of the first data packet. Alternatively, the second state report is sent when a prohibit timer has expired or a prohibit timer does not run, and the reordering timer of the receiving window expires. For example, the CU sends the second state report to the DU in the second network device, the DU sends the second state report to the RU in the second network device, and then the RU sends the second state report to the first communication apparatus.

Optionally, the related method corresponding to the second communication apparatus in the foregoing embodiments includes: updating a third variable when a sequence number of the first data packet is greater than or equal to the third variable. An updated third variable is the sequence number of the first data packet or is the sequence number of the first data packet plus 1, and the third variable is associated with a maximum value of a sequence number of a data packet received on a receive side.

In a fourth possible implementation, the communication apparatus 1700 may be a CU in the second network device, and is configured to implement related methods corresponding to the second communication apparatus in the foregoing embodiments. For specific functions, refer to the descriptions in the foregoing embodiments.

For example, the related method corresponding to the second communication apparatus in the foregoing embodiments includes: receiving a first data packet; and updating a second variable of a receiving window when the first data packet is completely received and a sequence number of the first data packet is the second variable. An updated second variable is greater than or equal to a sequence number of a data packet that is in the receiving window, that is not completely received, and that is not indicated by the first communication apparatus as being no longer transmitted, and the second variable is a lower edge of the receiving window. For example, an RU in the second network device receives the first data packet from the first communication apparatus, and sends the first data packet to a DU in the second network device. The CU may receive the first data packet from the DU.

Optionally, the related method corresponding to the second communication apparatus in the foregoing embodiments includes: updating a third variable when a sequence number of the first data packet is equal to the third variable. An updated third variable is the sequence number of the first data packet or is the sequence number of the first data packet plus 1, and the third variable is associated with a maximum value of a sequence number of a data packet received on a receive side.

In addition, the communication apparatus 1700 may alternatively be a first terminal device, and is configured to implement a related method corresponding to the first communication apparatus in the foregoing embodiments. For a specific function, refer to the descriptions in the foregoing embodiments. Details are not described again. The communication apparatus 1700 may alternatively be a second terminal device, and is configured to implement a related method corresponding to the second communication apparatus in the foregoing embodiments. For a specific function, refer to descriptions in the foregoing embodiments. Details are not described again.

Based on a same concept, as shown in FIG. 18, an embodiment of this application further provides another communication apparatus 1800, including an input/output interface 1810 and a logic circuit 1820. The input/output interface 1810 is configured to receive code instructions and transmit the code instructions to the logic circuit 1820. The logic circuit 1820 is configured to run the code instructions to perform the method performed by the first communication apparatus or the second communication apparatus in any one of the foregoing embodiments.

For example, the communication apparatus 1800 may be a network device or a component (for example, a CU) in the network device, or a terminal device or a component in the terminal device.

The following describes in detail operations performed when the communication apparatus 1800 is the first communication apparatus or the second communication apparatus.

In a first implementation, the communication apparatus 1800 may be the first communication apparatus, and is configured to perform the steps performed by the first communication apparatus in the foregoing method embodiments. Specifically, for example, the method performed by the first communication apparatus in the embodiment shown in any one of FIG. 4, FIG. 9, or FIG. 10.

For example, the communication apparatus 1800 is configured to send, by a first protocol layer in the first communication apparatus, first indication information to a first protocol layer in a second communication apparatus when a discard timer corresponding to a first data packet expires. The first indication information indicates that the first data packet is no longer transmitted.

Optionally, the communication apparatus 1800 may update a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

Optionally, the communication apparatus 1800 may further send third indication information to the first protocol layer in the second communication apparatus. The third indication information indicates that a data packet whose sequence number is less than the updated first variable is no longer transmitted.

For another example, the communication apparatus 1800 receives a first state report from a second communication apparatus, where the first state report includes NACK information of a second data packet; and sends second indication information to the first protocol layer in the second communication apparatus when a first condition is met, where the second indication information indicates that the second data packet is no longer transmitted; or sends the second data packet to the second communication apparatus when a first condition is not met. The first condition is one or more of the following: a discard timer corresponding to the second data packet has expired or a discard timer corresponding to the second data packet does not run; a sequence number of the second data packet is less than a first variable of a transmitting window; or a quantity of retransmissions of the second data packet reaches a maximum quantity of retransmissions. The first variable is a lower edge of the transmitting window.

Optionally, the communication apparatus 1800 may update a first variable of a transmitting window. The first variable is a lower edge of the transmitting window. An updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

Optionally, the communication apparatus 1800 may further send third indication information to the first protocol layer in the second communication apparatus. The third indication information indicates that a data packet whose sequence number is less than the updated first variable is no longer transmitted.

Optionally, the communication apparatus 1800 may further update the quantity of retransmissions of the second data packet when the first condition is not met.

The communication apparatus 1800 provided in this embodiment may be the first communication apparatus to implement the method performed by the first communication apparatus. Therefore, for technical effects that can be achieved by the communication apparatus, refer to the foregoing method embodiments. Details are not described herein again.

In a second implementation, the communication apparatus 1800 may be the second communication apparatus, and is configured to perform the steps performed by the second communication apparatus in the foregoing method embodiments. Specifically, for example, the method performed by the second communication apparatus in the embodiment shown in any one of FIG. 4, FIG. 9, or FIG. 10.

For example, the communication apparatus 1800 receives first indication information from a first protocol layer in a first communication apparatus, where the first indication information indicates that the first data packet is no longer transmitted; and updates a second variable of a receiving window based on the first indication information, where an updated second variable is greater than or equal to a sequence number of a data packet that is in the receiving window, that is not completely received, and that is not indicated by the first communication apparatus as being no longer transmitted, and the second variable is a lower edge of the receiving window.

Optionally, the communication apparatus 1800 may further send a second state report to the first communication apparatus when a reordering timer of the receiving window expires. The second state report includes NACK information of the first data packet or includes ACK information of the first data packet.

Optionally, when the communication apparatus 1800 sends the second state report to the first communication apparatus when the reordering timer of the receiving window expires, the communication apparatus 1800 may send the second state report to the first communication apparatus when a prohibit timer has expired or a prohibit timer does not run, and the reordering timer of the receiving window expires.

Optionally, the communication apparatus 1800 may further update a third variable when a sequence number of the first data packet is greater than or equal to the third variable. An updated third variable is the sequence number of the first data packet or is the sequence number of the first data packet plus 1, and the third variable is associated with a maximum value of a sequence number of a data packet received on a receive side.

For another example, the communication apparatus 1800 may receive a first data packet from a first communication apparatus; and update a second variable of a receiving window when the first data packet is completely received and a sequence number of the first data packet is the second variable. An updated second variable is greater than or equal to a sequence number of a data packet that is in the receiving window, that is not completely received, and that is not indicated by the first communication apparatus as being no longer transmitted, and the second variable is a lower edge of the receiving window.

Optionally, the communication apparatus 1800 may further update a third variable when the sequence number of the first data packet is equal to the third variable. An updated third variable is the sequence number of the first data packet or is the sequence number of the first data packet plus 1, and the third variable is associated with a maximum value of a sequence number of a data packet received on a receive side.

The communication apparatus 1800 provided in this embodiment may be the second communication apparatus to implement the method performed by the second communication apparatus. Therefore, for technical effects that can be achieved by the communication apparatus, refer to the foregoing method embodiments. Details are not described herein again.

An embodiment of this application further provides a communication system. The communication system may include one or more of the following: a first communication apparatus or a second communication apparatus. For the first communication apparatus or the second communication apparatus, refer to the descriptions in the foregoing method embodiments. Details are not described again.

An embodiment of this application further provides a computer-readable storage medium, including program instructions. When the program instructions are run on a computer, the computer is enabled to perform the method or the steps performed by the first communication apparatus or the second communication apparatus in the foregoing embodiments.

An embodiment of this application further provides a computer program product, including program instructions. When the program instructions run on a computer, the computer is enabled to perform the method or the steps of the first communication apparatus or the second communication apparatus in the foregoing embodiments.

An embodiment of this application provides a chip system. The chip system includes a processor, configured to implement the function (for example, perform a corresponding method or step) of the first communication apparatus or the second communication apparatus in the foregoing method. The chip system may include a chip, or may include a chip and another discrete component.

Optionally, the chip system further includes a memory, and the memory is configured to store program instructions, so that the processor reads and executes the program instructions, to implement the corresponding method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, applied to a first protocol layer in a first communication apparatus, wherein the method comprises:
sending first indication information to the first protocol layer in a second communication apparatus when a discard timer corresponding to a first data packet expires, wherein the first indication information indicates that the first data packet is no longer transmitted.

2. The method according to claim 1, wherein the method further comprises:
updating a first variable of a transmitting window, wherein the first variable is a lower edge of the transmitting window, wherein
an updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach a maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach a maximum quantity of retransmissions.

3. The method according to claim 2, wherein the first indication information further indicates that a data packet whose sequence number is less than the updated first variable is no longer transmitted.

4. A communication method, applied to a first protocol layer in a first communication apparatus, wherein the method comprises:
receiving a first state report from a second communication apparatus, wherein the first state report comprises NACK information of a second data packet; and
sending second indication information to the first protocol layer in the second communication apparatus when a first condition is met, wherein the second indication information indicates that the second data packet is no longer transmitted; or sending the second data packet to the second communication apparatus when the first condition is not met, wherein
the first condition is one or more of the following: a discard timer corresponding to the second data packet has expired or a discard timer corresponding to the second data packet does not run; a sequence number of the second data packet is less than a first variable of a transmitting window; or a quantity of retransmissions of the second data packet reaches a maximum quantity of retransmissions, wherein the first variable is a lower edge of the transmitting window.

5. The method according to claim 4, wherein the method further comprises:
updating the first variable, wherein an updated first variable is a smallest sequence number in sequence numbers of data packets that are in the transmitting window, that are not acknowledged by the second communication apparatus as being successfully received, and whose discard timers do not expire; or an updated first variable is a smallest sequence number in sequence numbers of data packets that are in the transmitting window, that are not acknowledged by the second communication apparatus as being successfully received, and whose quantities of retransmissions do not reach the maximum quantity of retransmissions; or an updated first variable is a smallest sequence number in sequence numbers of data packets that are in the transmitting window, that are not acknowledged by the second communication apparatus as being successfully received, whose discard timers do not expire, and whose quantities of retransmissions do not reach the maximum quantity of retransmissions.

6. The method according to claim 5, wherein the method further comprises:
sending third indication information to the first protocol layer in the second communication apparatus, wherein the third indication information indicates that a data packet whose sequence number is less than the updated first variable is no longer transmitted.

7. The method according to any one of claims 4 to 6, wherein when the first condition is not met, the method further comprises:
updating the quantity of retransmissions of the second data packet.

8. A communication method, applied to a first protocol layer in a second communication apparatus, wherein the method comprises:
receiving first indication information from the first protocol layer in a first communication apparatus, wherein the first indication information indicates that the first data packet is no longer transmitted; and
updating a second variable of a receiving window based on the first indication information, wherein an updated second variable is greater than or equal to a sequence number of a data packet that is in the receiving window, that is not completely received, and that is not indicated by the first communication apparatus as being no longer transmitted, and the second variable is a lower edge of the receiving window.

9. The method according to claim 8, wherein the method further comprises:
sending a second state report to the first communication apparatus when a reordering timer of the receiving window expires, wherein the second state report comprises NACK information of the first data packet or comprises ACK information of the first data packet.

10. The method according to claim 9, wherein sending the second state report to the first communication apparatus when the reordering timer of the receiving window expires comprises:
sending the second state report to the first communication apparatus when a prohibit timer has expired or a prohibit timer does not run, and the reordering timer of the receiving window expires.

11. The method according to any one of claims 8 to 10, wherein the method further comprises:
updating a third variable when a sequence number of the first data packet is greater than or equal to the third variable, wherein an updated third variable is the sequence number of the first data packet or is the sequence number of the first data packet plus 1, and the third variable is associated with a maximum value of a sequence number of a data packet received on a receive side.

12. A communication method, applied to a first protocol layer in a second communication apparatus, wherein the method comprises:
receiving a first data packet from a first communication apparatus; and
updating a second variable of a receiving window when the first data packet is completely received and a sequence number of the first data packet is the second variable, wherein an updated second variable is greater than or equal to a sequence number of a data packet that is in the receiving window, that is not completely received, and that is not indicated by the first communication apparatus as being no longer transmitted, and the second variable is a lower edge of the receiving window.

13. The method according to claim 12, wherein the method further comprises:
updating a third variable when the sequence number of the first data packet is equal to the third variable, wherein an updated third variable is the sequence number of the first data packet or is the sequence number of the first data packet plus 1, and the third variable is associated with a maximum value of a sequence number of a data packet received on a receive side.

14. A communication apparatus, comprising a module for performing the method according to any one of claims 1 to 7 or a module for performing the method according to any one of claims 8 to 13.

15. A communication apparatus, comprising a processor and a memory, wherein
the memory is configured to store one or more computer programs or instructions, and the processor is configured to execute the one or more computer programs or the instructions stored in the memory, to enable the communication apparatus to perform the method according to any one of claims 1 to 7 or perform the method according to any one of claims 8 to 13.

16. A communication system, comprising a first communication apparatus and/or a second communication apparatus, wherein a first protocol layer in the first communication apparatus is configured to perform the method according to any one of claims 1 to 7, and the first protocol layer in the second communication apparatus is configured to perform the method according to any one of claims 8 to 13.

17. A computer-readable storage medium, wherein the computer-readable storage medium stores a computer program or instructions, and the computer program or the instructions are used to implement the method according to any one of claims 1 to 7 or implement the method according to any one of claims 8 to 13.

18. A computer program product, wherein the computer program product comprises a computer program, and when the computer program is run a computer, the computer is enabled to perform the method according to any one of claims 1 to 7 or perform the method according to any one of claims 8 to 13.
